# EUROPEAN PATENT SPECIFICATION

(11) **EP 2 781 441 B1**
(45) Date of publication and mention of the grant of the patent: **03.02.2016**
(21) Application number: 13192173.6
(22) Date of filing: 08.11.2013
(51) Int. Cl.: B62J 6/00, B62J 17/00

(54) **Saddle type vehicle**
Sattelfahrzeug
Véhicule de type à selle

(30) Priority: 22.03.2013 JP 2013060609
(43) Date of publication of application: 24.09.2014
(73) Proprietor: Yamaha Hatsudoki Kabushiki Kaisha, Iwata-shi, Shizuoka 438-8501 (JP)
(72) Inventor: Hasegawa, Hirofumi, 10540 Amphur Bangsaothong, Samutprakarn (TH); Hongpong, Nantakorn, 10540 Amphur Bangsaothong, Samutprakarn (TH)
(74) Representative: Zimmermann, Tankred Klaus

(56) References cited:
- EP-A1- 0 751 063
- EP-A1- 2 463 184

## Description

### BACKGROUND OF THE INVENTION

### 1. Field of the Invention

The present invention relates to a saddle type vehicle.

### 2. Description of the Related Art

A conventional saddle type vehicle disclosed by Japanese Unexamined Patent Publication No. 2008-168888 includes a vehicle body cover with which a vehicle body frame is covered, and a rear flasher (in this publication, a flasher lamp 90) attached to the vehicle body cover. The vehicle body cover includes a rear cover (in this publication, a side cover 72) with which the rear of the vehicle body frame is covered. The rear flasher is fitted to an opening provided in the rear cover.

In the conventional saddle type vehicle of Japanese Unexamined Patent Publication No. 2008-168888, the rear cover with which the rear of the vehicle body frame is covered is an integrally-formed single member, and therefore is low in the degree of freedom in the shape of the rear cover.

EP 0 751 063 A1, on which the preamble of claim 1 is based, discloses a vehicle body assembly of a motorcycle comprising a side cover. The side cover is of a three piece structure comprising a right and left pair of lower side covers, a right-left integrated upper side cover and a right-left integrated front side cover. The rear end surface of the upper side cover is provided with a marker light in which a tail lamp, a stop lamp and turn signal lamps are integrated.

EP 2 463 184 A1 discloses a motorcycle including a seat, a rear wheel capable of swinging, and side covers that each cover the vehicle body below the seat and above the rear wheel. The motorcycle further includes a license plate bracket that extends downward from the lower ends of the side covers, a taillight unit disposed rearward of the rear ends of the side covers, and a rear bar disposed rearward of the seat and above the taillight unit.

### SUMMARY OF THE INVENTION

It is an object to provide an improved saddle type vehicle.

This object is achieved by a saddle type vehicle of claim 1.

The saddle type vehicle in accordance with an embodiment is advatageous in that the degree of freedom in the shape of the rear cover is enhanced in order to satisfy, for example, a design request or other requests requiring a higher degree of freedom for the rear cover.

It is conceivable that the rear cover is divided in order to enhance the degree of freedom in the shape of the rear cover.

On the other hand, the saddle type vehicle is also advantageous in that it can be made compact and this is also useful from the viewpoint of aesthetic improvement, cost reduction, and weight reduction.

The rear cover provided in the conventional saddle type vehicle is relatively long in an up-down direction, and therefore, presumably, it is relatively easy to divide the rear cover into upper and lower parts. However, it is difficult to secure the rigidity of each cover obtained by dividing the entire rear cover into upper and lower parts while reducing the length of the entire rear cover in the up-down direction.

In other words, for example, in the conventional saddle type vehicle, if the rear cover is divided into upper and lower parts at a position below the opening of the rear cover at which the rear flasher is disposed, each cover obtained by dividing the entire rear cover into upper and lower parts will have a certain degree of length in the up-down direction. Therefore, a certain degree of rigidity will be secured for each cover obtained by dividing the entire rear cover into upper and lower parts. Road surface vibrations, engine vibrations, etc., are applied to the rear cover, and therefore the rear cover is required to be rigid. Additionally, road surface vibrations, engine vibrations, etc., are transmitted to the rear flasher disposed at the rear cover, and therefore vibrations to the rear flasher are also required to be considered.

However, when the rear cover is divided into an upper cover and a lower cover, a worry will be caused about whether the rigidity of the lower cover is secured if the entire rear cover is intended to be made compact in the up-down direction. In other words, in the conventional saddle type vehicle, if the rear cover is divided into upper and lower parts at a position below the opening of the rear cover at which the rear flasher is disposed, it will be difficult to reduce the upper cover in size in the up-down direction because the rear flasher is disposed at the upper cover. Therefore, if the entire rear cover is intended to be made compact in the up-down direction, the length in the up-down direction of the lower cover must be reduced, and there is a fear that the rigidity of the lower cover will be reduced.

Accordingly, the present invention is based on the idea that the opening of the rear cover at which the rear flasher is disposed is defined by the upper and lower covers obtained by dividing the entire rear cover into upper and lower parts. In this case, even if the length in the up-down direction of the entire rear cover is reduced, the length in the up-down direction of each cover obtained by dividing the entire rear cover into upper and lower parts can be relatively easily secured, and the rigidity of each cover can be restrained from being reduced.

However, the a new problem has been encountered here. In detail, when an opening at which the rear flasher is disposed is defined by the upper and lower covers obtained by dividing the entire rear cover into upper and lower parts, vibrations transmitted from the upper and lower covers to the rear flasher have made a new problem. This problem results from the fact that, when the rear cover is divided, forces to restrict each portion of the rear cover from relatively moving become smaller than in a structure in which the entire rear cover is integrally formed. In other words, when the rear cover is divided, each portion of the rear cover easily moves in mutually different directions, and therefore vibrations that differ from each other in direction and in magnitude are transmitted from the upper and lower covers to the rear flasher. Therefore, the vibration speed and the amplitude of the rear flasher may increase and the durability of the rear flasher may decrease.

Therefore, one preferred embodiment of the present invention provides a saddle type vehicle that includes a vehicle body frame, a rear wheel supported by the vehicle body frame, a rear cover disposed beside the vehicle body frame (on an outward side in the vehicle width direction) and at least a portion of which is disposed above the rear wheel when the vehicle is viewed laterally, and a rear flasher at least a portion of which is disposed at the rear cover, in which the rear cover includes a flasher opening at which the rear flasher is disposed, an upper rear cover defining at least an upper edge of the flasher opening, a lower rear cover defining at least a lower edge of the flasher opening and formed structurally-independently of the upper rear cover, and fixing portions by which the upper rear cover and the lower rear cover are fixed together, and in which the rear flasher is attached to the fixing portions. The saddle type vehicle additionally includes a taillight positioned behind the rear flasher when the vehicle is viewed laterally and that is disposed inside a light opening being open at an outer surface of the rear cover. The rear flasher is separated from the taillight by a portion of the rear cover disposed between the rear flasher and the taillight.

The rear flasher may be attached to the fixing portions at a position at which it coincides with the fixing portions of the upper and lower rear covers when the vehicle is viewed laterally, or may be attached to the fixing portions at a position at which it is apart from the fixing portions of the upper and lower rear covers when the vehicle is viewed laterally. In other words, the phrase "the rear flasher is attached to the fixing portions" includes a case in which the rear flasher is attached to the fixing portions at a position at which it coincides with the fixing portions of the upper and lower rear covers when the vehicle is viewed laterally and a case in which the rear flasher is attached to the fixing portions at a position at which it is apart from the fixing portions of the upper and lower rear covers when the vehicle is viewed laterally. In other words, the rear flasher is merely required to be attached to portions of the upper and lower rear covers that have high fixing strength.

According to this arrangement, the rear cover at which at least a portion of the rear flasher is disposed is divided into a plurality of covers. In detail, the rear cover includes an upper rear cover defining at least the upper edge of the flasher opening and a lower rear cover defining at least the lower edge of the flasher opening. The upper rear cover and the lower rear cover are different members that are separate from each other.

The rear cover is thus divided into upper and lower parts, and therefore the degree of freedom in the shape of the rear cover can be heightened. Additionally, the upper rear cover and the lower rear cover define the flasher opening, and therefore the length in the up-down direction of the lower rear cover can be restrained from being reduced. As a result, the rigidity of the lower rear cover can be restrained from being reduced. Therefore, the rigidity of the upper rear cover and the rigidity of the lower rear cover can be secured while reducing the length in the up-down direction of the whole of the rear cover.

Additionally, the rear cover has fixing portions by which the upper rear cover and the lower rear cover are fixed together. The rear flasher is attached to the fixing portion of the rear cover. If the rear flasher is attached to the upper rear cover and to the lower rear cover at different positions, respectively, vibrations that differ in direction and in magnitude are liable to be easily transmitted from the upper and lower rear covers to the rear flasher. Therefore, vibrations of the rear flasher can be reduced by attaching the rear flasher to a fixing portion by which the upper rear cover and the lower rear cover are fixed together. Therefore, the durability of the rear flasher can be increased.

According to this arrangement, the taillight is disposed behind the rear flasher when the vehicle is viewed laterally. A portion of the rear cover is disposed between the taillight and the rear flasher. The rear flasher is separated from the taillight by a portion of the rear cover disposed between the rear flasher and the taillight. In other words, the taillight and the rear flasher are not in contact with each other, and are apart from each other. This makes it possible to heighten the discriminability between the taillight and the rear flasher.

In one preferred embodiment of the present invention, the saddle type vehicle may additionally include a first fixing mechanism that fixes the upper rear cover and the rear flasher together and a second fixing mechanism that fixes the lower rear cover and the rear flasher together at a position differing from that of the first fixing mechanism.

According to this arrangement, the rear flasher is fixed to the upper rear cover by the first fixing mechanism, and is fixed to the lower rear cover by the second fixing mechanism. The first fixing mechanism and the second fixing mechanism fix the rear flasher to the upper rear cover or to the lower rear cover at mutually different positions. Therefore, a bridged structure that extends from the fixed position between the upper rear cover and the rear flasher to the fixed position between the lower rear cover and the rear flasher is provided by the rear flasher. Therefore, the upper rear cover and the lower rear cover are connected together by the rear flasher, and the fixed strength of the upper and lower rear covers is heightened. As a result, it becomes difficult for the upper and lower rear covers to move in different directions, so that the vibrations of the rear flasher are reduced.

In one preferred embodiment of the present invention, the second fixing mechanism may be disposed at a more rearward position than the first fixing mechanism. A length in an up-down direction of the rear cover at a position of the second fixing mechanism in a vehicle front-rear direction when the vehicle is viewed laterally may be shorter than a length in the up-down direction of the rear cover at a position of the first fixing mechanism in the vehicle front-rear direction when the vehicle is viewed laterally. The second fixing mechanism may include three second fixing portions disposed at the rear flasher, the upper rear cover, and the lower rear cover, respectively, and a second fixing member that is inserted in each of the three second fixing portions and that fixes the three second fixing portions.

According to this arrangement, the second fixing mechanism is disposed at a more rearward position than the first fixing mechanism. The length in the up-down direction of the rear cover at the position of the second fixing mechanism in the vehicle front-rear direction when the vehicle is viewed laterally is shorter than the length in the up-down direction of the rear cover at the position of the first fixing mechanism in the vehicle front-rear direction when the vehicle is viewed laterally. Therefore, the second fixing mechanism is disposed at a position at which the length in the up-down direction of the rear cover is relatively small.

The three second fixing portions of the second fixing mechanism are disposed at the rear flasher, the upper rear cover, and the lower rear cover, respectively. The three second fixing portions are fixed by the shared member (second fixing member) inserted in each of the three second fixing portions. As a result, the strength to fix the rear flasher, the upper rear cover, and the lower rear cover can be heightened. Additionally, the length in the up-down direction of the rear cover at the position corresponding to the second fixing mechanism is relatively small, and therefore the rear flasher, the upper rear cover, and the lower rear cover can be firmly fixed while making the rear of the rear cover compact.

In one preferred embodiment of the present invention, the first fixing mechanism may include three first fixing portions disposed at the rear flasher, the upper rear cover, and the lower rear cover, respectively, and a first fixing member that is inserted in each of the three first fixing portions and that fixes the three first fixing portions. The second fixing mechanism may include three second fixing portions disposed at the rear flasher, the upper rear cover, and the lower rear cover, respectively, and a second fixing member that is inserted in each of the three second fixing portions and that fixes the three second fixing portions.

According to this arrangement, the three first fixing portions are disposed at the rear flasher, the upper rear cover, and the lower rear cover, respectively. The three first fixing portions are fixed by the first fixing member inserted in each of the three first fixing portions. Likewise, the three second fixing portions are disposed at the rear flasher, the upper rear cover, and the lower rear cover, respectively. The three second fixing portions are fixed by the second fixing member inserted in each of the three second fixing portions.

The three first fixing portions disposed at the rear flasher, the upper rear cover, and the lower rear cover, respectively, are thus fixed by the shared member (the first fixing member), and therefore the strength to fix the rear flasher, the upper rear cover, and the lower rear cover is heightened. Likewise, the three second fixing portions disposed at the rear flasher, the upper rear cover, and the lower rear cover, respectively, are fixed by the shared member (the second fixing member), and therefore the strength to fix the rear flasher, the upper rear cover, and the lower rear cover is heightened. Additionally, the first fixing mechanism and the second fixing mechanism fix the rear flasher, the upper rear cover, and the lower rear cover at mutually different positions, and therefore the strength to fix the rear flasher, the upper rear cover, and the lower rear cover is made even higher. As a result, the vibrations of the rear flasher, of the upper rear cover, and of the lower rear cover are reduced.

In one preferred embodiment of the present invention, the three first fixing portions may include a first outer fixing portion disposed at the upper rear cover, a first intermediate fixing portion that is disposed at the lower rear cover and that is disposed on an inward side of the first outer fixing portion in a vehicle width direction, and a first inner fixing portion that is disposed at the rear flasher and that is disposed on an inward side of the first intermediate fixing portion in the vehicle width direction. The three second fixing portions may include a second outer fixing portion disposed at the lower rear cover, a second intermediate fixing portion that is disposed at the upper rear cover and that is disposed on an inward side of the second outer fixing portion in the vehicle width direction, and a second inner fixing portion that is disposed at the rear flasher and that is disposed on an inward side of the second intermediate fixing portion in the vehicle width direction.

According to this arrangement, the first outer fixing portion, the first intermediate fixing portion, and the first inner fixing portion are disposed at the upper rear cover, the lower rear cover, and the rear flasher, respectively. The first outer fixing portion, the first intermediate fixing portion, and the first inner fixing portion are fixed by the first fixing member. The first outer fixing portion disposed at the upper rear cover is disposed on the outward side of the first intermediate fixing portion disposed at the lower rear cover, and therefore the outward movement of the lower rear cover is restricted by the upper rear cover, and the inward movement of the upper rear cover is restricted by the lower rear cover.

On the other hand, the second outer fixing portion, the second intermediate fixing portion, and the second inner fixing portion are disposed at the lower rear cover, the upper rear cover, and the rear flasher, respectively. In other words, the first fixing mechanism and the second fixing mechanism differ from each other in the positional relationship in the vehicle width direction between the outer fixing portion and the intermediate fixing portion. The second outer fixing portion, the second intermediate fixing portion, and the second inner fixing portion are fixed by the second fixing member. The second outer fixing portion disposed at the lower rear cover is disposed on the outward side of the second intermediate fixing portion disposed at the upper rear cover, and therefore the outward movement of the upper rear cover is restricted by the lower rear cover, and the inward movement of the lower rear cover is restricted by the upper rear cover.

The first fixing mechanism and the second fixing mechanism thus differ from each other in the positional relationship in the vehicle width direction between the outer fixing portion and the intermediate fixing portion, and therefore the relative movement in the vehicle width direction between the upper rear cover and the lower rear cover is restricted by the upper rear cover and the lower rear cover. Therefore, the upper rear cover and the lower rear cover can be restrained from deviating in the vehicle width direction. As a result, the upper rear cover and the lower rear cover can be restrained from vibrating in mutually different directions, and therefore the vibrations of the rear flasher can be reduced.

In one preferred embodiment of the present invention, the saddle type vehicle may additionally include a third fixing mechanism that fixes the rear flasher to at least one of the upper rear cover and the lower rear cover at a position differing from that of the first fixing mechanism and differing from that of the second fixing mechanism. The first fixing mechanism may fix the rear flasher to the rear cover at a position in front of the flasher opening when the vehicle is viewed laterally. The second fixing mechanism may fix the rear flasher to the rear cover at a more rearward position than the flasher opening when the vehicle is viewed laterally. The third fixing mechanism may fix the rear flasher to the rear cover at a more rearward position than a from end of the flasher opening and at a more forward position than a rear end of the flasher opening.

According to this arrangement, the rear flasher is fixed to at least one of the upper rear cover and the lower rear cover by the three fixing mechanisms (i.e., the first fixing mechanism, the second fixing mechanism, and the third fixing mechanism). The first fixing mechanism, the second fixing mechanism, and the third fixing mechanism fix the rear flasher to at least one of the upper rear cover and the lower rear cover at three positions surrounding the gravity center of the rear flasher when the vehicle is viewed laterally.

More specifically, the first fixing mechanism fixes the rear flasher to the rear cover at a position in front of the flasher opening when the vehicle is viewed laterally. The second fixing mechanism fixes the rear flasher to the rear cover at a more rearward position than the flasher opening when the vehicle is viewed laterally. The third fixing mechanism fixes the rear flasher to the rear cover at a position more rearward than the front end of the flasher opening and more forward than the rear end of the flasher opening.

The vibrations of a physical object are efficiently reduced by restricting the movement of the gravity center of the physical object. As described above, the first fixing mechanism, the second fixing mechanism, and the third fixing mechanism fix the rear flasher to the rear cover at three positions surrounding the gravity center of the rear flasher when the vehicle is viewed laterally. Therefore, the first fixing mechanism, the second fixing mechanism, and the third fixing mechanism can efficiently reduce the vibrations of the rear flasher.

In one preferred embodiment of the present invention, the third fixing mechanism may fix the rear flasher to at least one of the upper rear cover and the lower rear cover at a position more rearward than the front end of the flasher opening and more forward than the rear end of the flasher opening and higher than the first and second fixing mechanisms.

According to this arrangement, the third fixing mechanism fixes the rear flasher to the rear cover at a higher position than the first fixing mechanism and the second fixing mechanism. If the third fixing mechanism fixes the rear flasher to the rear cover at a lower position than the first and second fixing mechanisms, a space for disposing the third fixing mechanism is required to be provided at a lower position than the first and second fixing mechanisms, and therefore the lower edge of the rear cover (i.e., lower edge of the lower rear cover) will move downwardly, and the length in the up-down direction of the whole of the rear cover will increase. Therefore, the rear cover can be restrained from being enlarged in the up-down direction, and the rear of the saddle type vehicle can be made compact in the up-down direction by disposing the third fixing mechanism at a higher position than the first fixing mechanism and the second fixing mechanism.

In one preferred embodiment of the present invention, a length in the up-down direction from the rear end of the flasher opening to a lower edge of the lower rear cover when the vehicle is viewed laterally may be shorter than a length in the up-down direction from the rear end of the flasher opening to an upper edge of the upper rear cover when the vehicle is viewed laterally.

According to this arrangement, the lower rear cover is made compact in the up-down direction. In detail, the length in the up-down direction from the rear end of the flasher opening to the lower edge of the lower rear cover when the vehicle is viewed laterally is shorter than the length in the up-down direction from the rear end of the flasher opening to the upper edge of the upper rear cover when the vehicle is viewed laterally. The length in the up-down direction of the lower rear cover is small as mentioned above, and therefore the whole of the rear cover can be made compact in the up-down direction. As a result, the rear of the saddle type vehicle can be made compact in the up-down direction.

In one preferred embodiment of the present invention, the upper rear cover may include a side opening edge defining a portion of the light opening. The side opening edge may be disposed in front of the taillight when the vehicle is viewed laterally. A rear end of the lower rear cover may be disposed in front of the side opening edge when the vehicle is viewed laterally.

According to this arrangement, a portion of the light opening at which the taillight is disposed is defined by the side opening edge provided at the upper rear cover. The side opening edge is disposed in front of the taillight when the vehicle is viewed laterally. The rear end of the lower rear cover is disposed in front of the side opening edge, and does not define the light opening. Therefore, the number of members defining the light opening can be reduced. If there are many members defining the light opening, level differences resulting from an assembly error may be made around the taillight. Therefore, the occurrence of such level differences can be reduced by reducing the number of members defining the light opening. As a result, a gap can be restrained from being generated between the taillight and the rear cover.

In one preferred embodiment of the present invention, the upper rear cover may include an upper opening edge defining at least the upper edge of the flasher opening and a reinforcement portion at least a portion of which is disposed below the upper opening edge when the vehicle is viewed laterally. The reinforcement portion may be disposed at a more inward position than the upper opening edge in the vehicle width direction, and may extend from a more forward position than the upper opening edge to a more rearward position than the upper opening edge.

According to this arrangement, the reinforcement portion that reinforces the upper opening edge of the upper rear cover is disposed at the rear cover. The reinforcement portion is disposed at a more inward position than the upper opening edge in the vehicle width direction, and extends from a more forward position than the upper opening edge to a more rearward position than the upper opening edge. Therefore, the front opening end and the rear opening end that define the opening of the upper opening edge are connected together by the reinforcement portion, and, as a result, the opening of the upper opening edge is reinforced by the reinforcement portion. Therefore, the rigidity of the upper rear cover is restrained from being reduced. Additionally, although at least a portion of the reinforcement portion is disposed below the upper opening edge when the vehicle is viewed laterally, the reinforcement portion is disposed at a more inward position than the upper opening edge in the vehicle width direction, and therefore at least a portion of the reinforcement portion is disposed on the inward side of the lower rear cover. Therefore, the length in the up-down direction of the whole of the rear cover can be made shorter than in a structure in which the reinforcement portion and the lower rear cover are arranged side by side in the up-down direction. As a result, the rear of the saddle type vehicle can be made compact in the up-down direction.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a left side view of a saddle type vehicle according to a preferred embodiment of the present invention.
FIG. 2 is a front view of the saddle type vehicle according to the preferred embodiment of the present invention.
FIG. 3 is a rear view of the saddle type vehicle according to the preferred embodiment of the present invention.
FIG. 4 is a left side view of the rear of the saddle type vehicle.
FIG. 5 is a rear view of the rear of the saddle type vehicle.
FIG. 6 is a schematic exploded perspective view showing a state in which a rear cover and a taillight have been divided.
FIG. 7 is a schematic exploded perspective view showing a state in which a side rear cover and a rear flasher have been disassembled.
FIG. 8 is a view of the side rear cover and the rear flasher seen from the inward side.
FIG. 9 is a view of the side rear cover and the rear flasher seen from below.
FIG. 10 is a left side view showing a state in which an upper rear cover and a lower rear cover have been disassembled.
FIG. 11 is an enlarged view of the rear of the saddle type vehicle.
FIG. 12 is a view of the side rear cover and the rear flasher seen from the inward side.
FIG. 13 is a sectional view along line XIII-XIII of FIG. 11.
FIG. 14 is a sectional view along line XIV-XIV of FIG. 11.
FIG. 15 is a sectional view along line XV-XV of FIG. 11.

### DETAILED DESCRIPTION OF THE PREFERRED EMBODIMENTS

Each of front, rear, upward, downward, leftward, and rightward directions in the following description is based on a basic posture equivalent to a state in which a saddle type vehicle 1 is traveling in a straight line on a horizontal plane, and is based on the point of view of a driver when the driver looks forwardly. The right-left direction is equivalent to a vehicle width direction. In the following description, the term "inward" denotes a direction that leads to the center WO in the width direction of the saddle type vehicle 1 (i.e., leads to a vertical plane that passes through the center line of a head tube 7 and that is perpendicular to the rotational axis of a rear wheel Wr), whereas the term "outward" denotes a direction away from the center WO in the width direction of the saddle type vehicle 1.

First, a structure of the whole of the saddle type vehicle 1 will be broadly described.

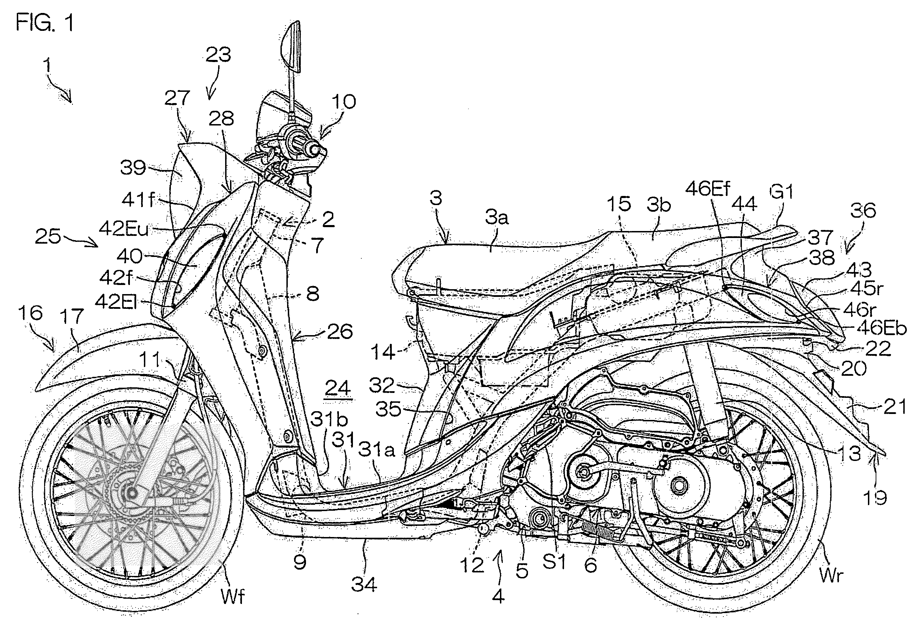

As shown in FIG. 1, the saddle type vehicle 1 includes a front wheel Wf and a rear wheel Wr, a vehicle body frame 2 that supports the front and rear wheels Wf and Wr, and a saddle type seat 3 disposed above the vehicle body frame 2. The saddle type vehicle 1 additionally includes a swing unit 4 supported by the vehicle body frame 2 swingably in the up-down direction. The swing unit 4 includes an engine (internal combustion engine) 5 that generates power by which the saddle type vehicle 1 travels and a driving mechanism 6 that transmits the power of the engine 5 to the rear wheel Wr.

As shown in FIG. 1, the vehicle body frame 2 includes a head tube 7 extending obliquely upwardly and rearwardly, a main frame 8 extending from the head tube 7 obliquely downwardly and rearwardly, and a pair of seat frames 9 extending from the main frame 8 obliquely upwardly and rearwardly. The vehicle body frame 2 additionally includes a cross member by which the pair of seat frames 9 are connected together. The pair of seat frames 9 extend in the front-rear direction, and are disposed apart from each other in the vehicle width direction. The head tube 7 is disposed at the center of the saddle type vehicle 1 in the vehicle width direction. The pair of seat frames 9 are disposed on the rightward side and the leftward side, respectively, with respect to the center WO in the width direction of the saddle type vehicle 1. The cross member extends from one of the pair of seat frames 9 to the other seat frame 9.

As shown in FIG. 1, the seat 3 is disposed above the pair of seat frames 9. The seat 3 is disposed behind the head tube 7. The seat 3 is supported by the pair of seat frames 9. The seat 3 extends in the front-rear direction. The seat 3 may be a single-person seat or a two-person seat. FIG. 1 shows an example in which a two-person seat that includes a driver seat 3 a on which a driver sits and a tandem scat 3b on which a fellow passenger sits is used as the seat 3. The saddle type vehicle 1 includes a fold-up tandem step S1 on which the feet of the fellow passenger are put and a tandem grip G1 that is disposed on the rearward, rightward, and leftward sides with respect to the seat 3 and that is U-shaped when the vehicle is viewed planarly.

As shown in FIG. 1, the saddle type vehicle 1 includes a handle 10 that is operated by the driver and a front fork 11 that rotates rightwardly and leftwardly around the central axis of a steering shaft together with the handle 10 and the front wheel Wf.

As shown in FIG. 1, the front fork 11 rotatably supports the front wheel Wf. The front fork 11 is supported by the head tube 7. Therefore, the front wheel Wf is supported by the vehicle body frame 2 through the front fork 11. The front wheel Wf is disposed in front of the engine 5. The steering shaft equivalent to the upper portion of the front fork 11 is inserted in the head tube 7. The steering shaft is rotatable around the steering axis (i.e., the central axis of the steering shaft) with respect to the head tube 7. The handle 10 is attached to the front fork 11 above the head tube 7. The handle 10 is disposed in front of the seat 3 and above the seat 3. When the handle 10 is operated, the front wheel Wf and the front fork 11 rotate rightwardly and leftwardly together with the handle 10. As a result, the saddle type vehicle 1 is steered.

As shown in FIG. 1, the saddle type vehicle 1 includes a pivot shaft 12 by which the vehicle body frame 2 and the swing unit 4 are connected together so that the swing unit 4 can swing upwardly and downwardly with respect to the vehicle body frame 2 and a rear suspension 13 that absorbs vibrations of the vehicle body frame 2.

As shown in FIG. 1, the pivot shaft 12 is disposed below the seat 3 when the vehicle is viewed laterally. The pivot shaft 12 extends in the vehicle width direction. The pivot shaft 12 is attached to the vehicle body frame 2. The engine 5 is attached to the pivot shaft 12 in a posture in which the reciprocating direction of the piston (i.e., axial direction of the cylinder) extends in the front-rear direction when the vehicle is viewed planarly. The engine 5 is swingable in the up-down direction around the pivot axis (i.e., center line of the pivot shaft 12) with respect to the vehicle body frame 2. The driving mechanism 6 is connected to the engine 5, and swings around the pivot axis together with the engine 5. Therefore, the swing unit 4 is attached to the vehicle body frame 2 through the pivot shaft 12, and is swingable in the up-down direction around the pivot axis with respect to the vehicle body frame 2.

As shown in FIG. 1, the swing unit 4 extends rearwardly from the pivot shaft 12. The rear wheel Wr is rotatably supported by a rear end (i.e., portion of the driving mechanism 6) of the swing unit 4. Therefore, the rear wheel Wr is attached to the vehicle body frame 2 through the pivot shaft 12 and the swing unit 4. The rear wheel Wr is swingable in the up-down direction around the pivot axis together with the swing unit 4 with respect to the vehicle body frame 2. The rear wheel Wr is disposed below the pair of seat frames 9 when the vehicle is viewed laterally. Therefore, the rear wheel Wr is disposed below the seat 3. The engine 5 is disposed in front of the rear wheel Wr.

As shown in FIG. 1, the rear suspension 13 is disposed at a more rearward position than the pivot shaft 12. The rear suspension 13 is disposed below the seat 3. The rear suspension 13 inclines forwardly and rearwardly so that the upper end of the rear suspension 13 is located at a more forward position than the lower end of the rear suspension 13. The upper end of the rear suspension 13 is attached to the vehicle body frame 2. The lower end of the rear suspension 13 is attached to the rear end of the swing unit 4. The rear suspension 13 is extensible and contractible in the axial direction of the rear suspension 13. The amount of movement of the rear wheel Wr around the pivot axis is restricted by the rear suspension 13. Additionally, vibrations transmitted from the rear wheel Wr to the vehicle body frame 2 are absorbed by the rear suspension 13. As a result, the vibrations of the vehicle body frame 2 are reduced.

As shown in FIG. 1, the saddle type vehicle 1 includes a storage box 14 that is open upwardly and a fuel tank 15 that contains fuel to be supplied to the engine 5.

As shown in FIG. 1, the storage box 14 and the fuel tank 15 are disposed below the seat 3. Therefore, an opening defined by an upper end of the storage box 14 is closed by the seat 3. The opening of the storage box 14 is opened and closed by the seat 3. The storage box 14 and the fuel tank 15 are connected to the vehicle body frame 2, and are supported by the vehicle body frame 2. The pair of seat frames 9 are disposed on the rightward and leftward sides, respectively, with respect to the storage box 14. The storage box 14 is disposed in front of the fuel tank 15. The fuel tank 15 may be disposed at a more forward position than the storage box 14 without being disposed behind the storage box 14.

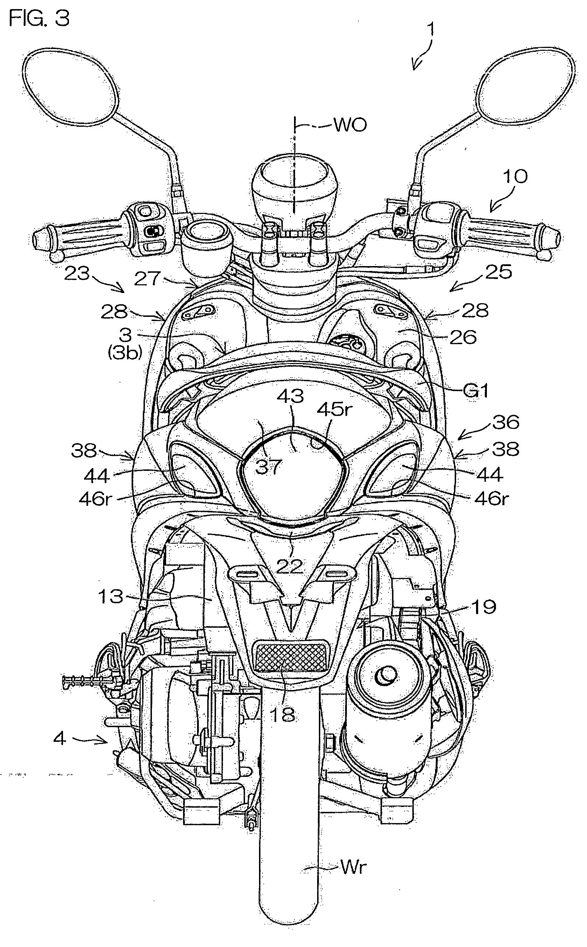

As shown in FIG. 1, the saddle type vehicle 1 includes a front fender 16 with which the front wheel Wf is covered, a rear fender 19 with which the rear wheel Wr is covered, and a vehicle body cover 23 with which the vehicle body frame 2 is covered. As shown in FIG. 3, the saddle type vehicle 1 additionally includes a reflex reflector 18 attached to the rear fender 19.

As shown in FIG. 1, the front fender 16 is disposed above the front wheel Wf. The handle 10 is disposed at a higher position than the front fender 16. The front fender 16 is attached to the front fork 11. The front fender 16 rotates around the steering axis rightwardly and leftwardly together with the front fork 11. The front fender 16 includes an upper fender portion 17 disposed above the front wheel Wf and a rear fender portion disposed behind the front wheel Wf.

As shown in FIG. 1, the rear fender 19 is disposed above and behind the rear wheel Wr. The rear fender 19 includes an upper fender portion 20 disposed above the rear wheel Wr and a rear fender portion 21 disposed at an obliquely upward and rearward position with respect to the rear wheel Wr. The rear fender 19 additionally includes a light supporting portion 22 disposed below a taillight 43 described later. The upper fender portion 20 is disposed between the seat 3 and the rear wheel Wr in the up-down direction, and is attached to the vehicle body frame 2. The upper fender portion 20 extends in the front-rear direction, and the rear fender portion 21 extends from the rear end of the upper fender portion 20 obliquely downwardly and rearwardly. The light supporting portion 22 extends rearwardly from the rear end of the upper fender portion 20 above the rear fender portion 21.

As shown in FIG. 1, a portion of the front fender 16 and a portion of the rear fender 19 are disposed inside the vehicle body cover 23. Likewise, the storage box 14 and the fuel tank 15 are disposed inside the vehicle body cover 23. The front fender 16 extends forwardly from the vehicle body cover 23 when the vehicle is viewed laterally, and the rear fender 19 extends from the vehicle body cover 23 obliquely downwardly and rearwardly when the vehicle is viewed laterally. The vehicle body cover 23 is supported by the vehicle body frame 2.

As shown in FIG. 1, the vehicle body cover 23 includes a concave portion 24 open upwardly, rightwardly, and leftwardly between the front wheel Wf and the engine 5 in the front-rear direction. The concave portion 24 extends in the vehicle width direction. The bottom of the concave portion 24 is disposed at a lower position than the seat 3. The bottom of the concave portion 24 is disposed between the front wheel Wf and the engine 5 in the front-rear direction. The feet and legs of the driver sitting on the seat 3 are placed in the concave portion 24. Therefore, the concave portion 24 defines a riding space in which the feet and legs of the driver sitting on the seat 3 are placed.

As shown in FIG. 1, the vehicle body cover 23 includes a front cover 25 disposed in front of the head tube 7 and an inner panel 26 disposed behind the head tube 7.

As shown in FIG. 1, the front cover 25 is disposed in front of the inner panel 26. The seat 3 is disposed behind the front cover 25 and the inner panel 26. The front cover 25 and the inner panel 26 are different members that are separate from each other. The front cover 25 extends rearward from the front(frontage) of the saddle type vehicle 1 to the lateral side of the inner panel 26 through the lateral side of head tube 7.The front cover 25 and the inner panel 26 define a portion of a riding space.

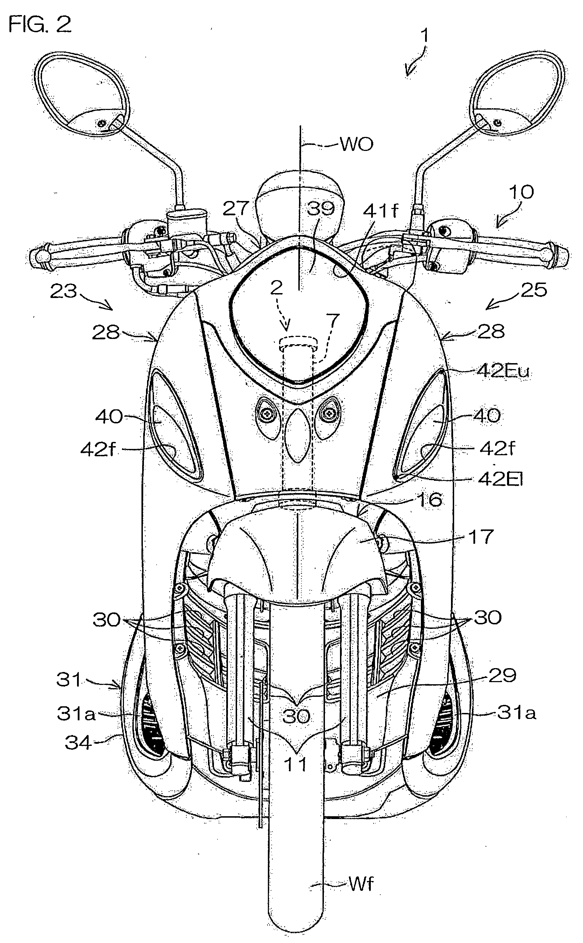

As shown in FIG. 2, the front cover 25 includes a central front cover 27 disposed in front of the head tube 7 and a pair of side front covers 28 disposed on the rightward and leftward sides, respectively, with respect to the central front cover 27.

As shown in FIG. 2, the central front cover 27 is disposed between the pair of side front covers 28 in the vehicle width direction. Likewise, the inner panel 26 is disposed between the pair of side front covers 28 in the vehicle width direction. The central front cover 27 and the side front cover 28 are different members that are separate from each other. As shown in FIG. 1, the side front cover 28 extends rearward from the front of the saddle type vehicle 1 to the lateral side of the inner panel 26 through the lateral side of head tube 7. The legs of the driver sitting on the seat 3 are placed behind the side front cover 28. A portion of the front fender 16 is disposed between the pair of side front covers 28 in the vehicle width direction, and extends forwardly from the pair of side front covers 28 when the vehicle is viewed laterally. A front end portion of the front fender 16 is disposed at a more forward position than the side front cover 28 and the central front cover 27.

As shown in FIG. 2, the vehicle body cover 23 includes an inner cover 29 disposed between the pair of side front covers 28 in the vehicle width direction.

As shown in FIG. 2, the inner cover 29 is disposed inside the front cover 25 and the inner panel 26. The inner cover 29 is disposed behind the front wheel Wf. Additionally, the inner cover 29 is disposed in front of the inner panel 26. Therefore, the inner cover 29 is disposed between the front wheel Wf and the inner panel 26 in the front-rear direction. The inner cover 29 has a plurality of air holes 30 through which the wind generated by the traveling of the saddle type vehicle 1 is guided to the engine 5.

As shown in FIG. 1, the vehicle body cover 23 includes a flat foot board 31 disposed above the seat frame 9, an undercover 34 disposed below the flat foot board 31, and a box cover 32 disposed in front of the storage box 14.

As shown in FIG. 1, the flat foot board 31 is disposed between the front wheel Wf and the engine 5 in the front-rear direction. A portion of the flat foot board 31 is disposed at a more forward position than the seat 3 and at a more rearward position than the head tube 7. The tandem step S1 is disposed behind the flat foot board 31 when the vehicle is viewed laterally. The box cover 32 is disposed above the flat foot board 31 when the vehicle is viewed laterally. The box cover 32 is disposed behind the front cover 25 and the inner panel 26. The flat foot board 31 and the box cover 32 are disposed at a lower position than the seat 3.

As shown in FIG. 1, the flat foot board 31 is disposed above the seat frame 9. The inner panel 26 and the side front cover 28 extend upwardly from the flat foot board 31 to a position higher than the seat 3. The box cover 32 extends upwardly from the flat foot board 31 to the seat 3. The undercover 34 is disposed below the flat foot board 31. The undercover 34 is disposed on the downward, rightward, and leftward sides with respect to the seat frame 9. The flat foot board 31 and the undercover 34 are different members that are separate from each other. The flat foot board 31 and the undercover 34 are attached to the seat frame 9.

As shown in FIG. 1, the flat foot board 31 includes a footrest portion 31a disposed at a lower position than the seat 3 and a front end portion 31b extending from the front end of the footrest portion 31 a obliquely upwardly and forwardly. As shown in FIG. 2, the footrest portion 31a extends from the right end of the saddle type vehicle 1 to the left end of the saddle type vehicle 1. Therefore, the flat foot board 31 extends from the right end of the saddle type vehicle 1 to the left end of the saddle type vehicle 1. The feet of the driver sitting on the seat 3 are placed on the flat foot board 31. The upper surface of the flat foot board 31 may be a completely flat surface, or may be a substantially flat surface having such a degree of ruggedness as to enable the driver to place the feet thereon without difficulty (e.g., ruggedness of about 1 to 2 cm).

As shown in FIG. 1, the vehicle body cover 23 includes a rear cover 36 disposed on the upward, rightward, and leftward sides with respect to the pair of seat frames 9.

As shown in FIG. 1, the rear cover 36 is disposed at a more rearward position than the front cover 25 and the inner panel 26. A portion of the rear cover 36 is disposed between the seat 3 and the rear wheel Wr in the up-down direction when the vehicle is viewed laterally. The rear cover 36 extends rearwardly from the flat foot board 31 and the box cover 32 when the vehicle is viewed laterally. The flat foot board 31, the box cover 32, and the undercover 34 define a V groove 35 that is V-shaped when the vehicle is viewed laterally and that is open obliquely upwardly and rearwardly. A portion of the rear cover 36 is disposed inside the V groove 35.

As shown in FIG. 3, the rear cover 36 includes a central rear cover 37 disposed above the rear wheel Wr when the vehicle is viewed from behind and a pair of side rear covers 38 disposed on the rightward and leftward sides, respectively, with respect to the central rear cover 37.

As shown in FIG. 1, the central rear cover 37 is disposed above the rear fender 19. The central rear cover 37 is disposed behind the seat 3. The pair of side rear covers 38 are disposed on the rightward and leftward sides, respectively, with respect to the pair of seat frames 9. The storage box 14 and the fuel tank 15 are disposed between the pair of side rear covers 38 in the vehicle width direction. The upper fender portion 20 of the rear fender 19 is disposed between the pair of side rear covers 38 in the vehicle width direction, and the rear fender portion 21 of the rear fender 19 is disposed below the pair of side rear covers 38 when the vehicle is viewed laterally. The central rear cover 37 and the side rear cover 38 are different members that are separate from each other. The central rear cover 37 and the side rear cover 38 are attached to the vehicle body frame 2.

As shown in FIG. 2, the saddle type vehicle 1 includes a headlight 39 that emits light forwardly from the saddle type vehicle 1 and a pair of front flashers 40 that blink when the saddle type vehicle 1 turns right or left.

As shown in FIG. 2, a portion of the headlight 39 and a portion of the front flasher 40 are disposed inside the front cover 25. A lens of the headlight 39 through which light passes is exposed from a headlight opening 41f open at the outer surface of the front cover 25, and a lens of the front flasher 40 through which light passes is exposed from a flasher opening 42f open at the outer surface of the front cover 25. The flasher opening 42f is disposed at a more outward position than the headlight opening 41f. The upper end of the headlight opening 41f is disposed at a higher position than the pair of flasher openings 42f. The headlight opening 41f is disposed above the front wheel Wf and the front fender 16 when the vehicle is viewed frontally. The flasher opening 42f is disposed at a more outward position than the front wheel Wf and the front fender 16 when the vehicle is viewed frontally.

As shown in FIG. 2, the length in the vehicle width direction (i.e., width) of the headlight opening 41 f is longer than the length in the vehicle width direction of the front wheel Wf. Additionally, the length in the vehicle width direction of the headlight opening 41f is longer than the length in the vehicle width direction of the flasher opening 42f. The length in the up-down direction (i.e., height) of the flasher opening 42f is longer than the length in the vehicle width direction of the flasher opening 42f. Therefore, the flasher opening 42f is long in the up-down direction. A lower end 42E1 of the flasher opening 42f is disposed at a more inward position than an upper end 42Eu of the flasher opening 42f. The lower end 42E1 of the flasher opening 42f equivalent to an inner end is disposed at a more outward position than the front fender 16.

As shown in FIG. 1, the headlight opening 41f and the flasher opening 42f are disposed at a more forward position than the handle 10 and the inner panel 26. The flasher opening 42f is disposed at a lower position than the handle 10. The flasher opening 42f is disposed at a more forward position than the handle 10. The headlight opening 41 f and the flasher opening 42f are disposed above the front wheel Wf and the front fender 16 when the vehicle is viewed laterally. The upper end 42Eu of the flasher opening 42f is disposed at a more rearward position than the headlight opening 41f when the vehicle is viewed laterally. The lower end 42E1 of the flasher opening 42f is disposed below the headlight opening 41f when the vehicle is viewed laterally. A portion of the flasher opening 42f is disposed at the same height as the seat 3.

As shown in FIG. 3, the saddle type vehicle 1 includes a taillight 43 that emits light rearwardly from the saddle type vehicle 1 and a pair of rear flashers 44 that blink when the saddle type vehicle 1 turns right or left.

As shown in FIG. 3, a portion of the taillight 43 and a portion of the rear flasher 44 are disposed inside the rear cover 36. A lens of the taillight 43 through which light passes is exposed from a light opening 45r open at the outer surface of the rear cover 36, and a lens of the rear flasher 44 through which light passes is exposed from the flasher opening 46r open at the outer surface of the rear cover 36. The light opening 45r is disposed between the two flasher openings 46r in the vehicle width direction. The upper end of the light opening 45r is disposed at a higher position than the two flasher openings 46r. The lower end of the light opening 45r is disposed at a lower position than the two flasher openings 46r. The light opening 45r is disposed above the rear wheel Wr and the rear fender 19 when the vehicle is viewed from behind. The two flasher openings 46r are disposed at a more outward position than the rear wheel Wr when the vehicle is viewed from behind.

As shown in FIG. 3, the length in the vehicle width direction of the light opening 45r is longer than the length in the vehicle width direction of the rear wheel Wr. Additionally, the length in the vehicle width direction of the light opening 45r is longer than the length in the vehicle width direction of the flasher opening 46r. As shown in FIG. 1, the length in the up-down direction of the flasher opening 46r is shorter than the length in the front-rear direction of the flasher opening 46r. Therefore, the flasher opening 46r is long in the front-rear direction. The front end 46Ef of the flasher opening 46r is disposed at a higher position than the rear end 46Eb of the flasher opening 46r. Additionally, the front end 46Ef of the flasher opening 46r is disposed at a more forward position than the light opening 45r. The rear end 46Eb of the flasher opening 46r is disposed at a more rearward position than the front end of the light opening 45r. The flasher opening 46r is disposed in front of the light opening 45r when the vehicle is viewed laterally.

As shown in FIG. 1, the taillight 43 is disposed behind the rear flasher 44 when the vehicle is viewed laterally. The light opening 45r and the flasher opening 46r are disposed at a more rearward position than the engine 5. The light opening 45r and the flasher opening 46r are disposed at a lower position than the handle 10. The light opening 45r and the flasher opening 46r are disposed at a lower position than the headlight 39. The upper end 42Eu of the flasher opening 42f is disposed at a higher position than the light opening 45r and the flasher opening 46r when the vehicle is viewed laterally.

Next, a structure of the rear of the saddle type vehicle 1 will be described in detail.

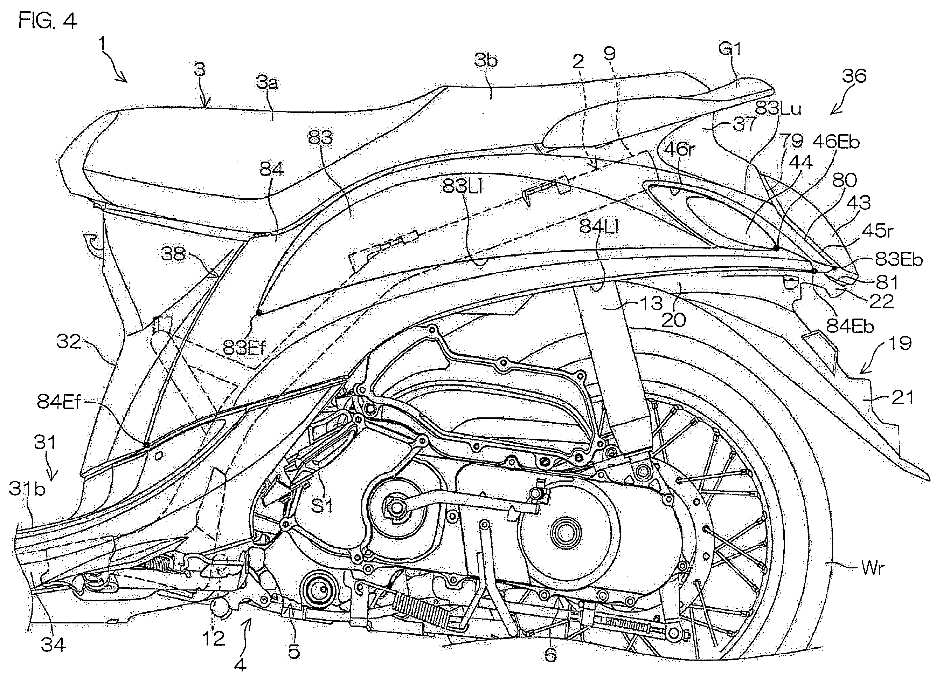

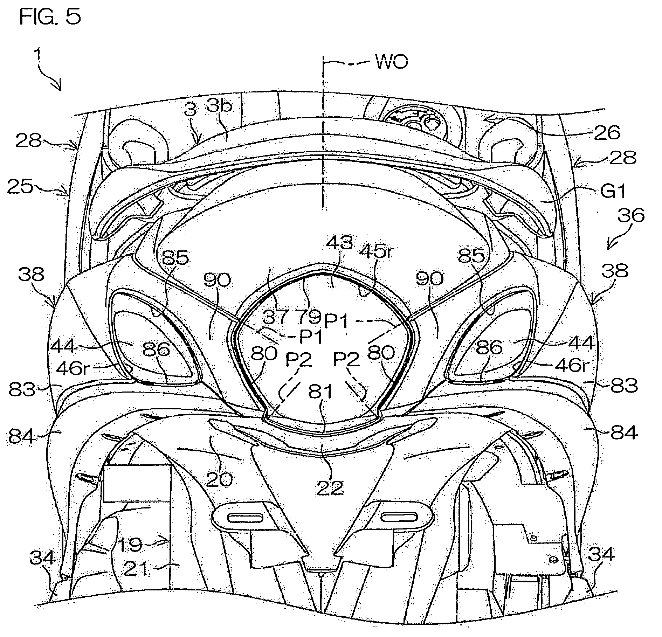

As shown in FIG. 4 and FIG. 5, the saddle type vehicle 1 includes the central rear cover 37 disposed above the rear wheel Wr when the vehicle is viewed from behind, the pair of side rear covers 38 disposed on the rightward and leftward sides, respectively, with respect to the central rear cover 37, and the rear fender 19 disposed above and behind the rear wheel Wr.

As shown in FIG. 5, a part of the central rear cover 37 is disposed above the taillight 43 when the vehicle is viewed from behind. A part of the side rear cover 38 (rear portion 90u described later) is disposed on the outward side of the taillight 43 when the vehicle is viewed from behind. A portion of the rear fender 19 (light supporting portion 22) is disposed below the taillight 43 when the vehicle is viewed from behind. The central rear cover 37, the side rear cover 38, and the rear fender 19 define the light opening 45r.

Specifically, as shown in FIG. 5, the central rear cover 37 includes an upper opening edge 79 that defines the upper edge of the light opening 45r. The side rear cover 38 includes a side opening edge 80 that defines the side edge of the light opening 45r. The rear fender 19 includes a lower opening edge 81 that defines the lower edge of the light opening 45r. A boundary position P1 is a boundary between the upper opening edge 79 and the side opening edge 80, and a boundary position P2 is a boundary between the side opening edge 80 and the lower opening edge 81. As shown in FIG. 4, the upper opening edge 79 is disposed in front of the taillight 43 when the vehicle is viewed laterally. Likewise, the side opening edge 80 is disposed in front of the taillight 43 when the vehicle is viewed laterally. A rear end 84Eb, described later, of the lower rear cover 84 is disposed in front of the side opening edge 80 when the vehicle is viewed laterally, and is apart from the side opening edge 80.

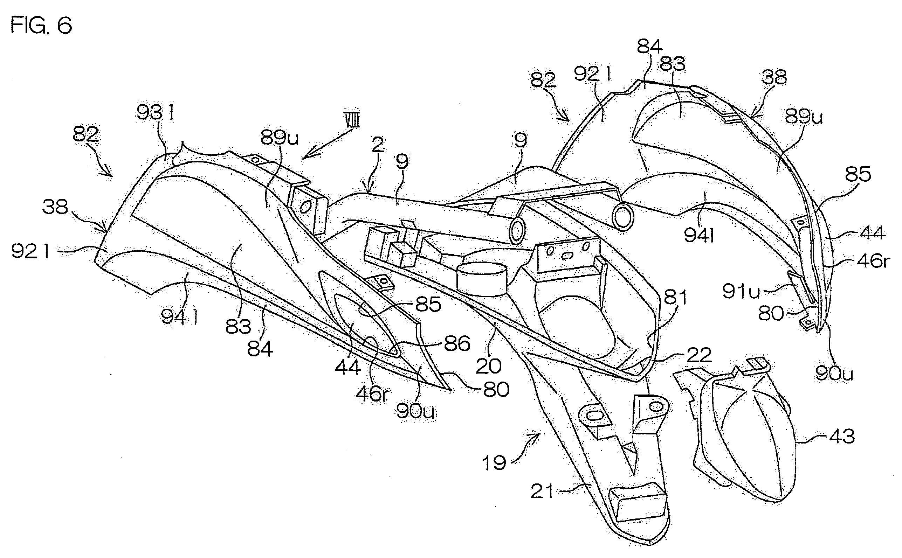

As shown in FIG. 6, the saddle type vehicle 1 includes a pair of cover assemblies 82 disposed on the rightward and leftward sides, respectively, with respect to the pair of seat frames 9.

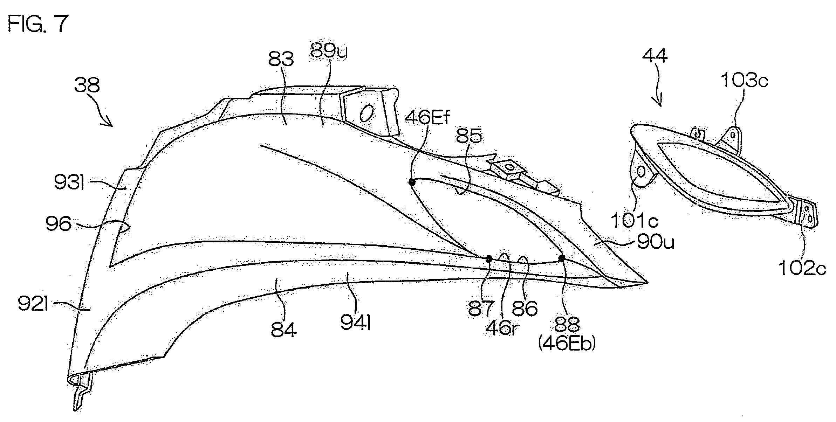

As shown in FIG. 6 and FIG. 7, each cover assembly 82 includes the side rear cover 38 disposed on the outward side of the seat frame 9 and the rear flasher 44 held by the side rear cover 38. As shown in FIG. 7, the rear flasher 44 is fitted to the flasher opening 46r from the inward side of the side rear cover 38. As shown in FIG. 6, the upper fender portion 20 of the rear fender 19 is disposed between the pair of cover assemblies 82 in the vehicle width direction. The upper fender portion 20 is attached to the vehicle body frame 2. Each cover assembly 82 is attached to the vehicle body frame 2, and is attached to the upper fender portion 20. As a result, each cover assembly 82 is supported by the vehicle body frame 2.

As shown in FIG. 5, the side rear cover 38 includes an upper rear cover 83 at least a portion of which is disposed above the rear flasher 44 when the vehicle is viewed laterally and a lower rear cover 84 at least a portion of which is disposed below the rear flasher 44 when the vehicle is viewed laterally.

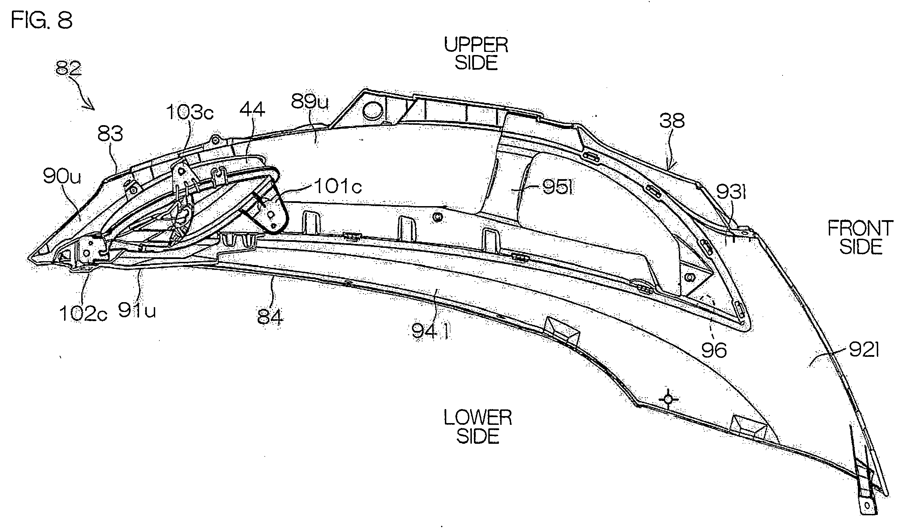

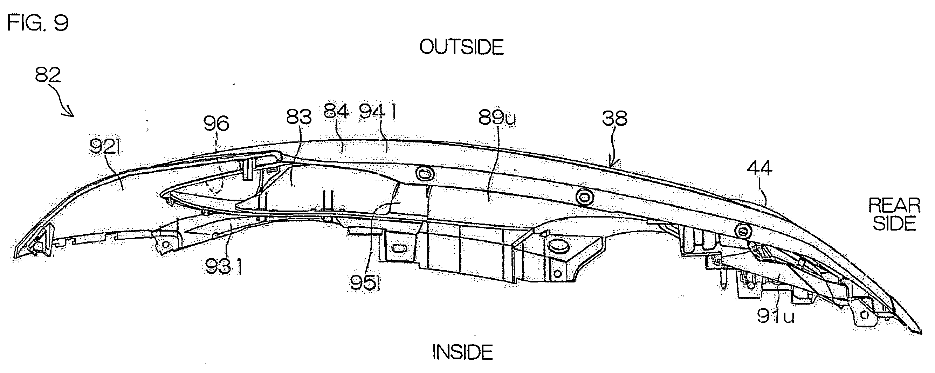

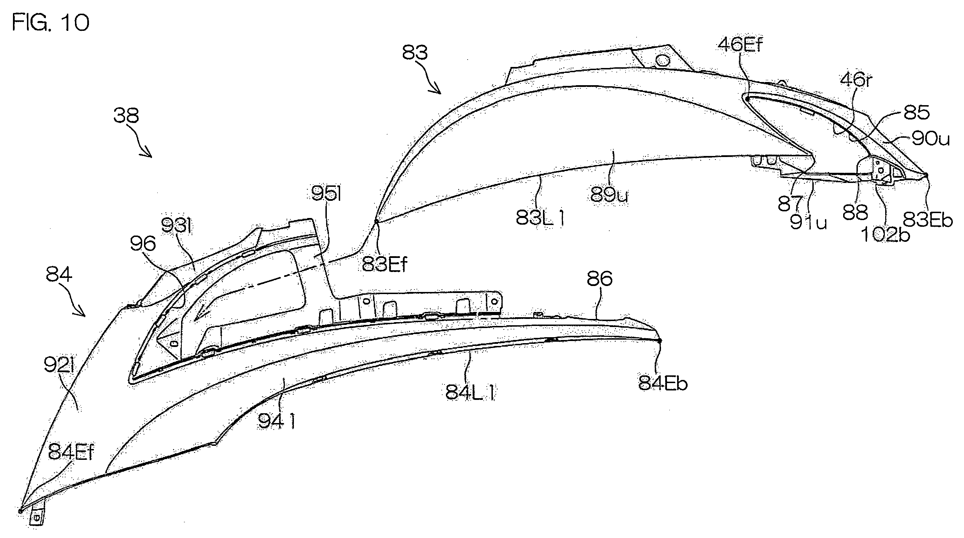

As shown in FIG. 10, the upper rear cover 83 and the lower rear cover 84 are different members that are separate from each other. As shown in FIG. 8 and FIG. 9, the upper rear cover 83 and the lower rear cover 84 are fixed to each other. The rear flasher 44 is fixed to the upper rear cover 83 and to the lower rear cover 84. As shown in FIG. 10, the length in the front-rear direction of the upper rear cover 83 is longer than the length in the up-down direction of the upper rear cover 83. Therefore, the upper rear cover 83 is long in the front-rear direction. Likewise, the length in the front-rear direction of the lower rear cover 84 is longer than the length in the up-down direction of the lower rear cover 84. Therefore, the upper rear cover 83 is long in the front-rear direction.

As shown in FIG. 4, a front end 83Ef of the upper rear cover 83 is disposed at a more rearward position than a front end 84Ef of the lower rear cover 84. A rear end 83Eb of the upper rear cover 83 is disposed at a more rearward position than the rear end 84Eb of the lower rear cover 84. The rear end 84Eb of the lower rear cover 84 is disposed at a higher position than the front end 84Ef of the lower rear cover 84. A lower edge 83L1 of the upper rear cover 83 is disposed at a higher position than a lower edge 84L1 of the lower rear cover 84. The length in the up-down direction from the rear end 46Eb of the flasher opening 46r to the lower edge 84L1 of the lower rear cover 84 when the vehicle is viewed laterally is shorter than the length in the up-down direction from the rear end 46Eb of the flasher opening 46r to the upper edge 83Lu of the upper rear cover 83 when the vehicle is viewed laterally.

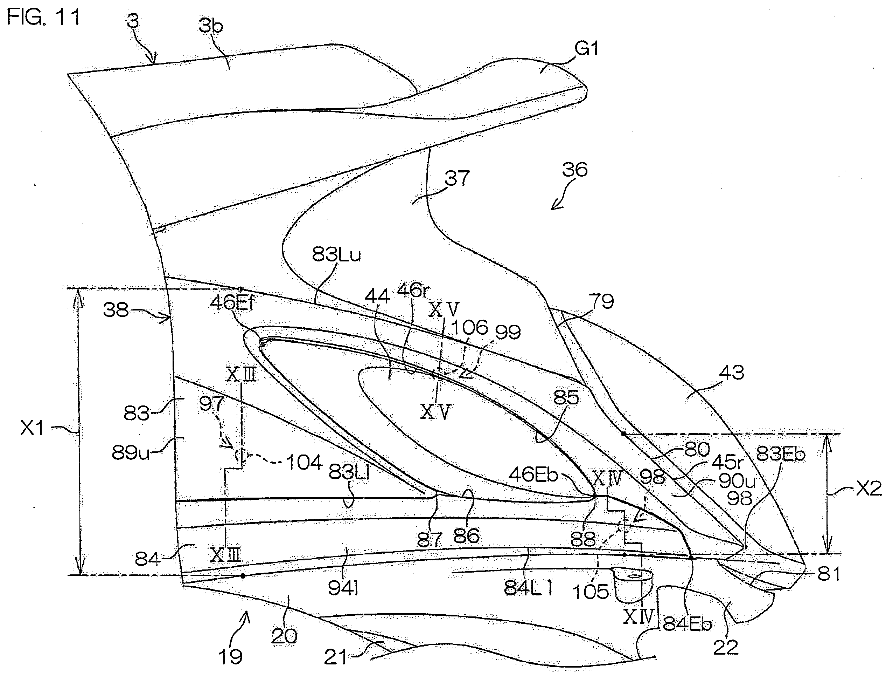

As shown in FIG. 11, the upper rear cover 83 and the lower rear cover 84 define the flasher opening 46r. The upper rear cover 83 includes an upper opening edge 85 that defines the upper edge of the flasher opening 46r. The lower rear cover 84 includes a lower opening edge 86 that defines the lower edge of the flasher opening 46r.

As shown in FIG. 11, the upper opening edge 85 is open downwardly. The upper opening edge 85 has the shape of the letter U that is open downwardly when the vehicle is viewed laterally. The upper rear cover 83 includes a front opening end 87 and a rear opening end 88 that define the opening of the upper opening edge 85. The front opening end 87 is disposed at a more forward position than the rear opening end 88 when the vehicle is viewed laterally. Therefore, the front opening end 87 and the rear opening end 88 are disposed with an interval therebetween in the front-rear direction when the vehicle is viewed laterally. The lower opening edge 86 extends from the front opening end 87 to the rear opening end 88 when the vehicle is viewed laterally. Therefore, the lower opening edge 86 is disposed below the opening of the upper opening edge 85. The lower opening edge 86 is disposed at a more rearward position than the front end of the upper opening edge 85 equivalent to the front end 46Ef of the flasher opening 46r when the vehicle is viewed laterally.

As shown in FIG. 10, the upper rear cover 83 includes a forward portion 89u disposed in front of the flasher opening 46r when the vehicle is viewed laterally and a rearward portion 90u disposed above and behind the flasher opening 46r when the vehicle is viewed laterally.

As shown in FIG. 10, the forward portion 89u and the rearward portion 90u of the upper rear cover 83 define the flasher opening 46r. The rearward portion 90u extends from the front end 46Ef of the flasher opening 46r obliquely downwardly and rearwardly. The rear end of the rearward portion 90u equivalent to the rear end 83Eb of the upper rear cover 83 is disposed at a more rearward position than the rear end of the forward portion 89u equivalent to the front opening end 87. Additionally, the rear end of the rearward portion 90u is disposed at a lower position than the rear end of the forward portion 89u. As shown in FIG. 11, the rearward portion 90u is disposed between the rear flasher 44 and the taillight 43 when the vehicle is viewed laterally.

As shown in FIG. 5, the rearward portion 90u of the upper rear cover 83 is disposed between the rear flasher 44 and the taillight 43 when the vehicle is viewed from behind. The rear flasher 44 is separated from the taillight 43 by the rearward portion 90u. The rearward portion 90u extends between the rear flasher 44 and the taillight 43 in the vehicle width direction obliquely downwardly and inwardly when the vehicle is viewed from behind. The rear end of the rearward portion 90u is disposed on the outward side of the taillight 43 when the vehicle is viewed from behind. The rear end of the rearward portion 90u is disposed above the light supporting portion 22 of the rear fender 19.

As shown in FIG. 10, the upper rear cover 83 includes a reinforcement portion 91u that passes through a position below the flasher opening 46r and that extends rearwardly from the forward portion 89u to the rearward portion 90u when the vehicle is viewed laterally.

As shown in FIG. 10, a part of the reinforcement portion 91u is disposed below the upper opening edge 85 when the vehicle is viewed laterally. The reinforcement portion 91u extends in the front-rear direction when the vehicle is viewed laterally. The front end of the reinforcement portion 91 u is disposed at a more forward position than the upper opening edge 85, and the rear end of the reinforcement portion 91u is disposed at a more rearward position than the upper opening edge 85. Therefore, the reinforcement portion 91u extends from a more forward position than the upper opening edge 85 to a more rearward position than the upper opening edge 85. The reinforcement portion 91 u is disposed at a more inward position than the upper opening edge 85. As shown in FIG. 9, the reinforcement portion 91u is disposed on the inward side of the lower rear cover 84.

As shown in FIG. 10, the lower rear cover 84 includes a front end portion 921 disposed at a more forward position than the front end 83Ef of the upper rear cover 83 when the vehicle is viewed laterally, an upper edge portion 931 that extends from the front end portion 921 obliquely upwardly and rearwardly when the vehicle is viewed laterally, a lower edge portion 941 that passes through a space below the upper edge portion 931 and that extends rearwardly from the front end portion 921 when the vehicle is viewed laterally, and a connection portion 951 that extends from the upper edge portion 931 to the lower edge portion 941.

As shown in FIG. 10, the upper edge portion 931 and the lower edge portion 941 of the lower rear cover 84 extend rearwardly from the front end portion 921. The rear end of the lower edge portion 941 equivalent to the rear end 84Eb of the lower rear cover 84 is disposed at a more rearward position than the rear end of the upper edge portion 931. Therefore, the length in the front-rear direction of the lower edge portion 941 is longer than the length in the front-rear direction of the upper edge portion 931. As shown in FIG. 11, the lower edge portion 941 is disposed below the rear flasher 44. The lower edge portion 941 defines a portion of the flasher opening 46r. As shown in FIG. 10, the upper edge portion 931 is disposed above the lower edge portion 941 when the vehicle is viewed laterally. The upper edge portion 931 and the lower edge portion 941 define a V groove 96 having the shape of the letter V that is rearwardly open when the vehicle is viewed laterally. The front end 83Ef of the upper rear cover 83 is disposed inside the V groove 96. A part of the connection portion 951 is disposed inside the V groove 96 when the vehicle is viewed laterally. The connection portion 951 is disposed at a more inward position than the upper edge portion 931 and the lower edge portion 941. As shown in FIG. 8, the connection portion 951 is disposed on the inward side of the upper rear cover 83.

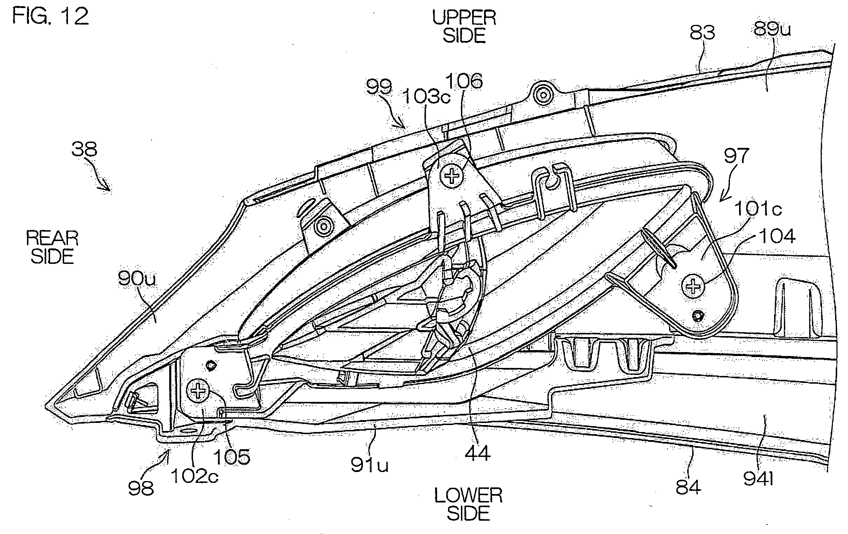

As shown in FIG. 12, the saddle type vehicle 1 includes a fixing mechanism that fixes two or more of the rear flasher 44, the upper rear cover 83, and the lower rear cover 84 at mutually different positions, respectively.

Specifically, as shown in FIG. 12, the saddle type vehicle 1 includes a first fixing mechanism 97 that fixes the three members (i.e., the rear flasher 44, the upper rear cover 83, and the lower rear cover 84) and a second fixing mechanism 98 that fixes the three members (i.e., the rear flasher 44, the upper rear cover 83, and the lower rear cover 84). The saddle type vehicle 1 additionally includes a third fixing mechanism 99 that fixes the two members (i.e., the upper rear cover 83 and the rear flasher 44).

As shown in FIG. 11, the first fixing mechanism 97 fixes the rear flasher 44, the upper rear cover 83, and the lower rear cover 84 at a first fixing position (i.e., position of the first screw 104) in front of the flasher opening 46r when the vehicle is viewed laterally. The second fixing mechanism 98 fixes the rear flasher 44, the upper rear cover 83, and the lower rear cover 84 at a second fixing position (i.e., position of the second screw 105) more rearward than the flasher opening 46r when the vehicle is viewed laterally. The third fixing mechanism 99 fixes the upper rear cover 83 and the rear flasher 44 at a more rearward position than the front end 46Ef of the flasher opening 46r, at a more forward position than the rear end 46Eb of the flasher opening 46r, and at a third fixing position (i.e., position of a third screw 106) above the first and second fixing positions.

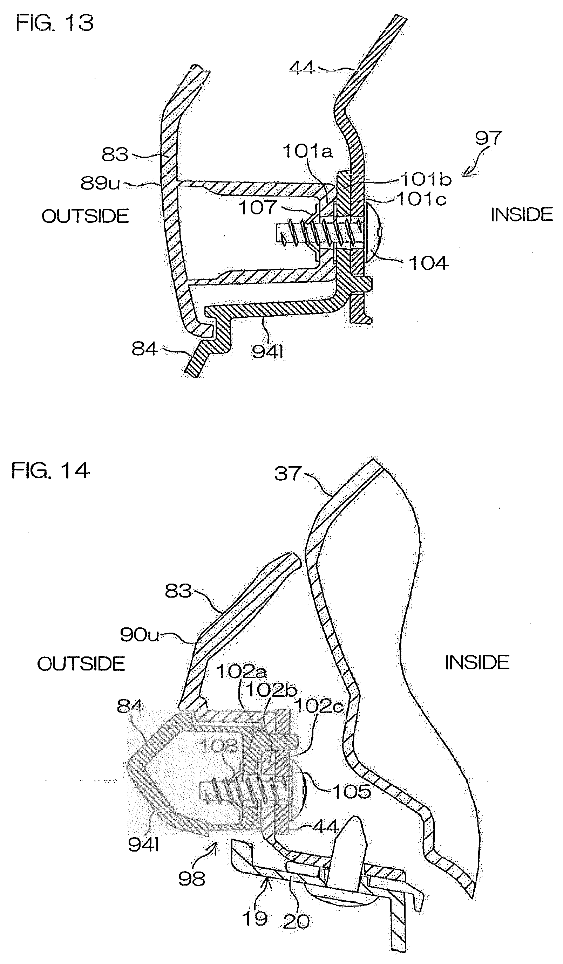

As shown in FIG. 13, the first fixing mechanism 97 includes three first fixing portions disposed at the rear flasher 44, the upper rear cover 83, and the lower rear cover 84, respectively. The three first fixing portions include a first outer fixing portion 101a disposed at the upper rear cover 83, a first intermediate fixing portion 101b that is disposed at the lower rear cover 84 and that is disposed on the inward side of the first outer fixing portion 101 a, and a first inner fixing portion 101c that is disposed at the rear flasher 44 and that is disposed on the inward side of the first intermediate fixing portion 101b. The first outer fixing portion 101a and the first intermediate fixing portion 101 b are one example of the "fixing portion" of the present invention.

As shown in FIG. 13, the first fixing mechanism 97 additionally includes a first screw 104 serving as a first fixing member that is inserted in each of the three first fixing portions and that fixes each fixing portion and a first nut 107 that is attached to a shank of the first screw 104 at a position opposite to a head of the first screw 104 with respect to the three first fixing portions. The head of the first screw 104 is disposed on the inward side of the three first fixing portions. The three first fixing portions are tightened by the head of the first screw 104 and by the first nut 107 in the axial direction of the first screw 104. As a result, the rear flasher 44, the upper rear cover 83, and the lower rear cover 84 are fixed.

As shown in FIG. 14, the second fixing mechanism 98 includes three second fixing portions disposed at the rear flasher 44, the upper rear cover 83, and the lower rear cover 84, respectively. The three second fixing portions include a second outer fixing portion 102a disposed at the lower rear cover 84, a second intermediate fixing portion 102b that is disposed at the upper rear cover 83 and that is disposed on the inward side of the second outer fixing portion 102a, and a second inner fixing portion 102c that is disposed at the rear flasher 44 and that is disposed on the inward side of the second intermediate fixing portion 102b. The second outer fixing portion 102a and the second intermediate fixing portion 102b are one example of the "fixing portion" of the present invention.

As shown in FIG. 14, the second fixing mechanism 98 additionally includes a second screw 105 serving as a second fixing member that is inserted in each of the three second fixing portions and that fixes the three second fixing portions and a second nut 108 that is attached to a shank of the second screw 105 at a position opposite to a head of the second screw 105 with respect to the three second fixing portions. The head of the second screw 105 is disposed on the inward side of the three first fixing portions. The three second fixing portions are tightened by the head of the second screw 105 and by the second nut 108 in the axial direction of the second screw 105. As a result, the rear flasher 44, the upper rear cover 83, and the lower rear cover 84 are fixed.

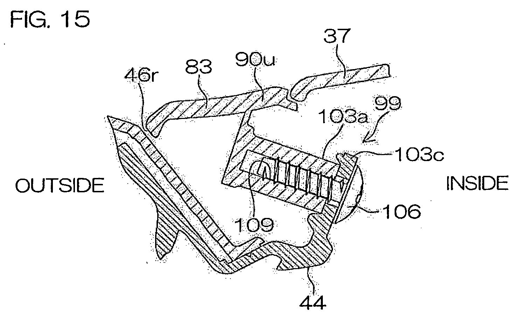

As shown in FIG. 15, the third fixing mechanism 99 includes two third fixing portions disposed at the rear flasher 44 and the upper rear cover 83, respectively. The two third fixing portions include a third outer fixing portion 103a disposed at the upper rear cover 83 and a third inner fixing portion 103c that is disposed at the rear flasher 44 and that is disposed on the inward side of the third outer fixing portion 103a.

As shown in FIG. 15, the third fixing mechanism 99 additionally includes a third screw 106 serving as a third fixing member that is inserted in each of the two third fixing portions and that fixes the two third fixing portions and a female thread hole 109 serving as a third nut that is disposed at the third outer fixing portion 103a and that is attached to a shank of the third screw 106 at a position opposite to a head of the third screw 106 with respect to the third inner fixing portion 103c. The head of the third screw 106 is disposed on the inward side of the two third fixing portions. The third inner fixing portion 103c is pressed against the third outer fixing portion 103a in the axial direction of the third screw 106 by the head of the third screw 106. As a result, the rear flasher 44 and the upper rear cover 83 are fixed.

As described above, in the present preferred embodiment, the rear cover 36 at which at least a portion of the rear flasher 44 is disposed is divided into a plurality of covers. In other words, the rear cover 36 includes the upper rear cover 83 defining at least the upper edge of the flasher opening 46r and the lower rear cover 84 defining at least the lower edge of the flasher opening 46r. The upper rear cover 83 and the lower rear cover 84 are different members that are separate from each other.

The rear cover 36 is thus divided into upper and lower parts, and therefore the degree of freedom in the shape of the rear cover 36 can be heightened. Additionally, the upper rear cover 83 and the lower rear cover 84 define the flasher opening 46r, and therefore the length in the up-down direction of the lower rear cover 84 can be restrained from being reduced. As a result, the rigidity of the lower rear cover 84 can be restrained from being reduced. Therefore, the rigidity of the upper rear cover 83 and the rigidity of the lower rear cover 84 can be secured while reducing the length in the up-down direction of the whole of the rear cover 36.

Additionally, the rear cover 36 has fixing portions by which the upper rear cover 83 and the lower rear cover 84 are fixed together. More specifically, the rear cover 36 has two pairs of fixing portions by which the upper rear cover 83 and the lower rear cover 84 are fixed together (i.e., has the first outer fixing portion 101a and the first intermediate fixing portion 101b, and the second outer fixing portion 102a and the second intermediate fixing portion 102b). The rear flasher 44 is attached to the fixing portion of the rear cover 36.

If the rear flasher 44 is attached to the upper rear cover 83 and to the lower rear cover 84 at different positions, respectively, vibrations that differ in direction and in magnitude are liable to be easily transmitted from the upper and lower rear covers 83 and 84 to the rear flasher 44. Therefore, the vibrations of the rear flasher 44 can be reduced by attaching the rear flasher 44 to a fixing portion by which the upper rear cover 83 and the lower rear cover 84 are fixed together. This makes it possible to improve the durability of the rear flasher 44.

Additionally, road surface vibrations resulting from the ruggedness of a road surface and vibrations of the engine 5 are generated during the traveling of the saddle type vehicle 1. Generally, the rotation speed (number of rotations) of the engine 5 varies within a wide range of 0 revolutions per minute (rpm) to several thousand revolutions per minute (rpm), and therefore the frequency range of engine vibrations is greater than the frequency range of road surface vibrations. The natural frequency of a conventional vehicle body cover falls within the range of the frequency of engine vibrations. On the other hand, in the present preferred embodiment, the rigidity of the rear cover 36 is made higher than in a conventional arrangement. Therefore, rigidity endurable not only against road surface vibrations but also against engine vibrations can be secured for the rear cover 36. This makes it possible to reduce the vibrations of the rear flasher 44.

Additionally, in the present preferred embodiment, the rear flasher 44 is fixed to the upper rear cover 83 by the first fixing mechanism 97, and is fixed to the lower rear cover 84 by the second fixing mechanism 9R The first fixing mechanism 97 and the second fixing mechanism 98 fix the rear flasher 44 to the upper rear cover 83 or to the lower rear cover 84 at mutually different positions. Therefore, a bridged structure that extends from the fixed position between the upper rear cover 83 and the rear flasher 44 to the fixed position between the lower rear cover 84 and the rear flasher 44 is provided by the rear flasher 44. Therefore, the upper rear cover 83 and the lower rear cover 84 are connected together by the rear flasher 44, and the fixed strength of the upper and lower rear covers 83 and 84 is heightened. As a result, it becomes difficult for the upper and lower rear covers 83 and 84 to move in different directions, so that the vibrations of the rear flasher 44 are reduced.

Additionally, in the present preferred embodiment, the second fixing mechanism 98 is disposed at a more rearward position than the first fixing mechanism 97. As shown in FIG. 11, the length X2 in the up-down direction of the rear cover 36 at the position of the second fixing mechanism 98 in the vehicle front-rear direction when the vehicle is viewed laterally is shorter than the length X1 in the up-down direction of the rear cover 36 at the position of the first fixing mechanism 97 in the vehicle front-rear direction when the vehicle is viewed laterally. Therefore, the second fixing mechanism 98 is disposed at a position at which the length in the up-down direction of the rear cover 36 is relatively small.

The three second fixing portions of the second fixing mechanism 98 (i.e., the second outer fixing portion 102a, the second intermediate fixing portion 102b, and the second inner fixing portion 102c) are disposed at the rear flasher 44, the upper rear cover 83, and the lower rear cover 84, respectively. The three second fixing portions are fixed by the shared member (i.e., the second screw 105) inserted in each of the three second fixing portions. As a result, the strength to fix the rear flasher 44, the upper rear cover 83, and the lower rear cover 84 can be heightened. Additionally, the length in the up-down direction of the rear cover 36 at the position corresponding to the second fixing mechanism 98 is relatively small, and therefore the rear flasher 44, the upper rear cover 83, and the lower rear cover 84 can be firmly fixed while making the rear of the rear cover 36 compact.

Additionally, in the present preferred embodiment, the three first fixing portions (i.e., the first outer fixing portion 101a, the first intermediate fixing portion 101b, and the first inner fixing portion 101c) are disposed at the rear flasher 44, the upper rear cover 83, and the lower rear cover 84, respectively. The three first fixing portions are fixed by the first fixing member inserted in each of the three first fixing portions. Likewise, the three second fixing portions (i.e., the second outer fixing portion 102a, the second intermediate fixing portion 102b, and the second inner fixing portion 102c) are disposed at the rear flasher 44, the upper rear cover 83, and the lower rear cover 84, respectively. The three second fixing portions are fixed by the second fixing member inserted in each of the three second fixing portions.

The three first fixing portions disposed at the rear flasher 44, the upper rear cover 83, and the lower rear cover 84, respectively, are thus fixed by the shared member (the first fixing member), and therefore the strength to fix the rear flasher 44, the upper rear cover 83, and the lower rear cover 84 is heightened. Likewise, the three second fixing portions disposed at the rear flasher 44, the upper rear cover 83, and the lower rear cover 84, respectively, are fixed by the shared member (the second fixing member), and therefore the strength to fix the rear flasher 44, the upper rear cover 83, and the lower rear cover 84 is heightened. Additionally, the first fixing mechanism 97 and the second fixing mechanism 98 fix the rear flasher 44, the upper rear cover 83, and the lower rear cover 84 at mutually different positions, and therefore the strength to fix the rear flasher 44, the upper rear cover 83, and the lower rear cover 84 is made even higher. As a result, the vibrations of the rear flasher 44, of the upper rear cover 83, and of the lower rear cover 84 are reduced.

Additionally, in the present preferred embodiment, the first outer fixing portion 101a, the first intermediate fixing portion 101b, and the first inner fixing portion 101c are disposed at the upper rear cover 83, the lower rear cover 84, and the rear flasher 44, respectively. The first outer fixing portion 101a, the first intermediate fixing portion 101 b, and the first inner fixing portion 101c are fixed by the first screw 104 serving as a first fixing member. The first outer fixing portion 101a disposed at the upper rear cover 83 is disposed on the outward side of the first intermediate fixing portion 101b disposed at the lower rear cover 84, and therefore the outward movement of the lower rear cover 84 is restricted by the upper rear cover 83, and the inward movement of the upper rear cover 83 is restricted by the lower rear cover 84.

On the other hand, the second outer fixing portion 102a, the second intermediate fixing portion 102b, and the second inner fixing portion 102c are disposed at the lower rear cover 84, the upper rear cover 83, and the rear flasher 44, respectively. In other words, the first fixing mechanism 97 and the second fixing mechanism 98 differ from each other in the positional relationship in the vehicle width direction between the outer fixing portion and the intermediate fixing portion. The second outer fixing portion 102a, the second intermediate fixing portion 102b, and the second inner fixing portion 102c are fixed by the second screw 105 serving as a second fixing member. The second outer fixing portion 102a disposed at the lower rear cover 84 is disposed on the outward side of the second intermediate fixing portion 102b disposed at the upper rear cover 83, and therefore the outward movement of the upper rear cover 83 is restricted by the lower rear cover 84, and the inward movement of the lower rear cover 84 is restricted by the upper rear cover 83.

The first fixing mechanism 97 and the second fixing mechanism 98 thus differ from each other in the positional relationship in the vehicle width direction between the outer fixing portion and the intermediate fixing portion, and therefore the relative movement in the vehicle width direction between the upper rear cover 83 and the lower rear cover 84 is restricted by the upper rear cover 83 and the lower rear cover 84. Therefore, the upper rear cover 83 and the lower rear cover 84 can be restrained from deviating in the vehicle width direction. As a result, the upper rear cover 83 and the lower rear cover 84 can be restrained from vibrating in mutually different directions, and therefore the vibrations of the rear flasher 44 can be reduced.

Additionally, in the present preferred embodiment, the rear flasher 44 is fixed to at least one of the upper rear cover 83 and the lower rear cover 84 by the three fixing mechanisms (i.e., the first fixing mechanism 97, the second fixing mechanism 98, and the third fixing mechanism 99). The first fixing mechanism 97, the second fixing mechanism 98, and the third fixing mechanism 99 fix the rear flasher 44 to at least one of the upper rear cover 83 and the lower rear cover 84 at three positions surrounding the gravity center of the rear flasher 44 when the vehicle is viewed laterally.

More specifically, the first fixing mechanism 97 fixes the rear flasher 44 to the rear cover 36 at a position in front of the flasher opening 46r when the vehicle is viewed laterally. The second fixing mechanism 98 fixes the rear flasher 44 to the rear cover 36 at a more rearward position than the flasher opening 46r when the vehicle is viewed laterally. The third fixing mechanism 99 fixes the rear flasher 44 to the rear cover 36 at a more rearward position than the front end 46Ef of the flasher opening 46r and at a more forward position than the rear end 46Eb of the flasher opening 46r.

The vibrations of a physical object are efficiently reduced by restricting the movement of the gravity center of the physical object. As described above, the first fixing mechanism 97, the second fixing mechanism 98, and the third fixing mechanism 99 fix the rear flasher 44 to the rear cover 36 at three positions surrounding the gravity center of the rear flasher 44 when the vehicle is viewed laterally. Therefore, the first fixing mechanism 97, the second fixing mechanism 98, and the third fixing mechanism 99 can efficiently reduce the vibrations of the rear flasher 44.

Additionally, in the present preferred embodiment, the third fixing mechanism 99 fixes the rear flasher 44 to the rear cover 36 at a higher position than the first fixing mechanism 97 and the second fixing mechanism 98. If the third fixing mechanism 99 fixes the rear flasher 44 to the rear cover 36 at a lower position than the first fixing mechanism 97 and the second fixing mechanism 98, a space for disposing the third fixing mechanism 99 is required to be provided at a lower position than the first fixing mechanism 97 and the second fixing mechanism 98, and therefore the lower edge of the rear cover 36 (i.e., lower edge 84L1 of the lower rear cover 84) will move downwardly, and the length in the up-down direction of the whole of the rear cover 36 will increase. Therefore, the rear cover 36 can be restrained from being enlarged in the up-down direction, and the rear of the saddle type vehicle 1 can be made compact in the up-down direction by disposing the third fixing mechanism 99 at a higher position than the first fixing mechanism 97 and the second fixing mechanism 98.

Additionally, in the present preferred embodiment, the length in the up-down direction from the rear end 46Eb of the flasher opening 46r to the lower edge 84L1 of the lower rear cover 84 when the vehicle is viewed laterally is shorter than the length in the up-down direction from the rear end 46Eb of the flasher opening 46r to the upper edge 83Lu of the upper rear cover 83 when the vehicle is viewed laterally. Therefore, the lower rear cover 84 is made compact in the up-down direction. The length in the up-down direction of the lower rear cover 84 is small as mentioned above, and therefore the whole of the rear cover 36 can be made compact in the up-down direction. As a result, the rear of the saddle type vehicle 1 can be made compact in the up-down direction.

Additionally, in the present preferred embodiment, the taillight 43 is disposed behind the rear flasher 44 when the vehicle is viewed laterally. A part (i.e., rearward portion 90u) of the rear cover 36 is disposed between the taillight 43 and the rear flasher 44. The rear flasher 44 is separated from the taillight 43 by a portion of the rear cover 36 disposed between the rear flasher 44 and the taillight 43. In other words, the taillight 43 and the rear flasher 44 are not in contact with each other, and are apart from each other. This makes it possible to heighten the discriminability between the taillight 43 and the rear flasher 44.

Additionally, in the present preferred embodiment, a portion of the light opening 45r at which the taillight 43 is defined by the side opening edge 80 provided at the upper rear cover 83. The side opening edge 80 is disposed in front of the taillight 43 when the vehicle is viewed laterally. The rear end 84Eb of the lower rear cover 84 is disposed in front of the side opening edge 80, and does not define the light opening 45r. Therefore, the number of members defining the light opening 45r can be reduced. If there are many members defining the light opening 45r, level differences resulting from an assembly error may be made around the taillight 43. Therefore, the occurrence of such level differences can be reduced by reducing the number of members defining the light opening 45r. As a result, a gap can be restrained from being generated between the taillight 43 and the rear cover 36.

Additionally, in the present preferred embodiment, the reinforcement portion 91u that reinforces the upper opening edge 85 of the upper rear cover 83 is disposed at the rear cover 36. The reinforcement portion 91u is disposed at a more inward position than the upper opening edge 85 in the vehicle width direction, and extends from a more forward position than the upper opening edge 85 to a more rearward position than the upper opening edge 85. Therefore, the front opening end 87 and the rear opening end 88 that define the opening of the upper opening edge 85 are connected together by the reinforcement portion 91u, and, as a result, the opening of the upper opening edge 85 is reinforced by the reinforcement portion 91u. Therefore, the rigidity of the upper rear cover 83 is restrained from being reduced. Additionally, although at least a portion of the reinforcement portion 91u is disposed below the upper opening edge 85 when the vehicle is viewed laterally, the reinforcement portion 91 u is disposed at a more inward position than the upper opening edge 85 in the vehicle width direction, and therefore at least a portion of the reinforcement portion 91u is disposed on the inward side of the lower rear cover 84. Therefore, the length in the up-down direction of the whole of the rear cover 36 can be made shorter than in a structure in which the reinforcement portion 91u and the lower rear cover 84 are arranged side by side in the up-down direction. As a result, the rear of the saddle type vehicle 1 can be made compact in the up-down direction.

Although the preferred embodiment of the present invention has been described as above, the present invention is not limited to the contents of the aforementioned preferred embodiment, and can be variously modified within the scope of the appended claims.

For example, as described in the aforementioned preferred embodiment, the saddle type vehicle 1 is a scooter type motorcycle. However, the saddle type vehicle 1 may be a sports type motorcycle, or may be an off-road type motorcycle, or may be a moped. Alternatively, without being limited to a motorcycle, the saddle type vehicle 1 may be an all-terrain vehicle, or may be a snowmobile.

Additionally, as described in the aforementioned preferred embodiment, the upper rear cover 83 includes the reinforcement portion 91u that reinforces the opening of the upper opening edge 85. However, the upper rear cover 83 is not necessarily required to include the reinforcement portion 91 u.

Additionally, as described in the aforementioned preferred embodiment, the saddle type vehicle 1 includes the three fixing mechanisms that fix two or more of the rear flasher 44, the upper rear cover 83, and the lower rear cover 84. However, the number of fixing mechanisms disposed in the saddle type vehicle 1 may be one or two, or may be four or more.

Additionally, as described in the aforementioned preferred embodiment, the third fixing mechanism 99 fixes the rear flasher 44 to the rear cover 36 at a higher position than the first fixing mechanism 97 and the second fixing mechanism 98. However, the third fixing mechanism 99 may fix the rear flasher 44 to the rear cover 36 at a lower position than the first fixing mechanism 97 and the second fixing mechanism 98. Additionally, the third fixing mechanism 99 may fix the rear flasher 44 to the rear cover 36 at a position equal in height to at least one of the first fixing mechanism 97 and the second fixing mechanism 98.

Additionally, as described in the aforementioned preferred embodiment, each of the first fixing mechanism 97 and the second fixing mechanism 98 fixes the three members (i.e., the rear flasher 44, the upper rear cover 83, and the lower rear cover 84), and the third fixing mechanism 99 fixes the two members (i.e., the rear flasher 44 and the upper rear cover 83). However, each of the first fixing mechanism 97 and the second fixing mechanism 98 may fix the two members (i.e., two of the rear flasher 44, the upper rear cover 83, and the lower rear cover 84). Additionally, the third fixing mechanism 99 may fix the three members (i.e., the rear flasher 44, the upper rear cover 83, and the lower rear cover 84).

While preferred embodiments of the present invention have been described in detail, these are merely specific examples used to clarify the technical contents of the present invention, and the present invention should not be interpreted as being limited to only these specific examples, and the scope of the present invention shall be limited only by the accompanying claims.

## Claims

1. A saddle type vehicle (1) comprising:
a vehicle body frame (2);
a rear wheel (Wr) supported by the vehicle body frame (2);
a rear cover (36) disposed beside the vehicle body frame (2) and at least a portion of which is disposed above the rear wheel (Wr) when the vehicle (1) is viewed laterally and;
a rear flasher (44) at least a portion of which is disposed at the rear cover (36);
the rear cover (36) includes:
a flasher opening (46r) at which the rear flasher (44) is disposed;
an upper rear cover (83) defining at least an upper edge of the flasher opening (46r);
a lower rear cover (84) defining at least a lower edge of the flasher opening (46r) and formed structurally-independently of the upper rear cover (83); and
fixing portions (101a to 101c, 102a to 102c, 103a, 103c) by which the upper rear cover (83) and the lower rear cover (84) are fixed together;
the rear flasher (44) is attached to the fixing portions (101a to 101c, 102a to 102c, 103a, 103c); the saddle type vehicle (1) further comprising
a taillight (43) disposed inside a light opening (45r) being open at an outer surface of the rear cover (36), **characterized in that** the taillight (43) is positioned behind the rear flasher (44) when the vehicle (1) is viewed laterally
and the rear flasher (44) is separated from the taillight (43) by a portion of the rear cover (36) disposed between the rear flasher (44) and the taillight (43).

2. The saddle type vehicle (1) according to claim 1, further comprising:
a first fixing mechanism (97) that fixes the upper rear cover (83) and the rear flasher (44) together; and
a second fixing mechanism (98) that fixes the lower rear cover (84) and the rear flasher (44) together at a position differing from that of the first fixing mechanism (97).

3. The saddle type vehicle (1) according to claim 2, wherein the second fixing mechanism (98) is disposed at a more rearward position than the first fixing mechanism (97), and
a length (X2) in an up-down direction of the rear cover (36) at a position of the second fixing mechanism (98) in a vehicle front-rear direction when the vehicle (1) is viewed laterally is shorter than a length (X1) in the up-down direction of the rear cover (36) at a position of the first fixing mechanism (97) in the vehicle front-rear direction when the vehicle (1) is viewed laterally, and
the second fixing mechanism (98) includes:
three second fixing portions (102a to 102c) disposed at the rear flasher (44), the upper rear cover (83), and the lower rear cover (84), respectively; and
a second fixing member (105) that is inserted in each of the three second fixing portions (102a to 102c) and that fixes the three second fixing portions (102a to 102c).

4. The saddle type vehicle (1) according to claim 2 or claim 3, wherein the first fixing mechanism (97) includes
three first fixing portions (101a to 101c) disposed at the rear flasher (44), the upper rear cover (83), and the lower rear cover (84), respectively; and
a first fixing member (104) that is inserted in each of the three first fixing portions (101a to 101c) and that fixes the three first fixing portions (101a to 101c), and
the second fixing mechanism (98) includes
three second fixing portions (102a to 102c) disposed at the rear flasher (44), the upper rear cover (83), and the lower rear cover (84), respectively; and
a second fixing member (105) that is inserted in each of the three second fixing portions (102a to 102c) and that fixes the three second fixing portions (102a to 102c).

5. The saddle type vehicle (1) according to claim 4, wherein the three first fixing portions (101a to 101c) include
a first outer fixing portion (101a) disposed at the upper rear cover (83);
a first intermediate fixing portion (101b) that is disposed at the lower rear cover (84) and that is disposed on an inward side of the first outer fixing portion (101a) in a vehicle width direction; and
a first inner fixing portion (101c) that is disposed at the rear flasher (44) and that is disposed on an inward side of the first intermediate fixing portion (101b) in the vehicle width direction, and
the three second fixing portions (102a to 102c) include
a second outer fixing portion (102a) disposed at the lower rear cover (84);
a second intermediate fixing portion (102b) that is disposed at the upper rear cover (83) and that is disposed on an inward side of the second outer fixing portion (102a) in the vehicle width direction; and
a second inner fixing portion (102c) that is disposed at the rear flasher (44) and that is disposed on an inward side of the second intermediate fixing portion (102b) in the vehicle width direction.

6. The saddle type vehicle (1) according to any one of claim 2 to claim 5, further comprising:
a third fixing mechanism (99) that fixes the rear flasher (44) to at least one of the upper rear cover (83) and the lower rear cover (84) at a position differing from that of the first fixing mechanism (97) and differing from that of the second fixing mechanism (98),
wherein the first fixing mechanism (97) fixes the rear flasher (44) to the rear cover (36) at a position in front of the flasher opening (46r) when the vehicle (1) is viewed laterally, and
the second fixing mechanism (98) fixes the rear flasher (44) to the rear cover (36) at a more rearward position than the flasher opening (46r) when the vehicle (1) is viewed laterally, and
the third fixing mechanism (99) fixes the rear flasher (44) to the rear cover (36) at a position more rearward than a front end (46Ef) of the flasher opening (46r) and more forward than a rear end (46Eb) of the flasher opening (46r).

7. The saddle type vehicle (1) according to claim 6, wherein the third fixing mechanism (99) fixes the rear flasher (44) to at least one of the upper rear cover (83) and the lower rear cover (84) at a position more rearward than the front end (46Ef) of the flasher opening (46r) and more forward than the rear end (46Eb) of the flasher opening (46r) and higher than the first fixing mechanism (97) and the second fixing mechanism (98).

8. The saddle type vehicle (1) according to any one of claim 1 to claim 7, wherein a length in the up-down direction from the rear end (46Eb) of the flasher opening (46r) to a lower edge (84L) of the lower rear cover (84) when the vehicle (1) is viewed laterally is shorter than a length in the up-down direction from the rear end (46Eb) of the flasher opening (46r) to an upper edge (83Lu) of the upper rear cover (83) when the vehicle (1) is viewed laterally.

9. The saddle type vehicle (1) according to claim 1, wherein the upper rear cover (83) includes a side opening edge (80) defining a portion of the light opening (45r),
the side opening edge (80) is disposed in front of the taillight (43) when the vehicle (1) is viewed laterally, and
a rear end (84Eb) of the lower rear cover (84) is disposed in front of the side opening edge (80) when the vehicle (1) is viewed laterally.

10. The saddle type vehicle (1) according to any one of claim 1 to claim 9, wherein the upper rear cover (83) includes
an upper opening edge (85) defining at least the upper edge of the flasher opening (46r); and
a reinforcement portion (91u) at least a portion of which is disposed below the upper opening edge (85) when the vehicle (1) is viewed laterally, and
the reinforcement portion (91u) is disposed at a more inward position than the upper opening edge (85) in the vehicle width direction, and extends from a more forward position than the upper opening edge (85) to a more rearward position than the upper opening edge (85).

## Patentansprüche

1. Ein Sattel-Typ-Fahrzeug (1), das folgende Merkmale aufweist:
einen Fahrzeugkörperrahmen (2);
ein Hinterrad (Wr), das durch den Fahrzeugkörperrahmen (2) getragen wird;
eine hintere Abdeckung (36), die neben dem Fahrzeugkörperrahmen (2) angeordnet ist, und von der zumindest ein Abschnitt über dem Hinterrad (Wr) angeordnet ist, wenn das Fahrzeug (1) von der Seite betrachtet wird; und
einen hinteren Blinker (44), von dem zumindest ein Abschnitt an der hinteren Abdeckung (36) angeordnet ist;
wobei die hintere Abdeckung (36) folgende Merkmale aufweist:
eine Blinkeröffnung (46r), an der der hintere Blinker (44) angeordnet ist;
eine obere hintere Abdeckung (83), die zumindest eine obere Kante der Blinkeröffnung (46r) definiert;
eine untere hintere Abdeckung (84), die zumindest eine untere Kante der Blinkeröffnung (46r) definiert und strukturell unabhängig von der oberen hinteren Abdeckung (83) gebildet ist; und
Befestigungsabschnitte (101a bis 101c, 102a bis 102c, 103a, 103c), durch die die obere hintere Abdeckung (83) und die untere hintere Abdeckung (84) aneinander befestigt sind;
wobei der hintere Blinker (44) an den Befestigungsabschnitten (101a bis 101c, 102a bis 102c, 103a, 103c) angebracht ist, wobei das Sattel-Typ-Fahrzeug (1) ferner folgendes Merkmal aufweist:
ein Rücklicht (43), das in einer Lichtöffnung (45r) angeordnet ist, die an einer Außenoberfläche der hinteren Abdeckung (36) offen ist, **dadurch gekennzeichnet, dass** das Rücklicht (43) hinter dem hinteren Blinker (44) angeordnet ist, wenn das Fahrzeug (1) von der Seite betrachtet wird,
und der hintere Blinker (44) von dem Rücklicht (43) getrennt ist durch einen Abschnitt der hinteren Abdeckung (36), der zwischen dem hinteren Blinker (44) und dem Rücklicht (43) angeordnet ist.

2. Das Sattel-Typ-Fahrzeug (1) gemäß Anspruch 1, das ferner folgende Merkmale aufweist:
einen ersten Befestigungsmechanismus (97), der die obere hintere Abdeckung (83) und den hinteren Blinker (44) aneinander befestigt; und
einen zweiten Befestigungsmechanismus (98), der die untere hintere Abdeckung (84) und den hinteren Blinker (44) aneinander befestigt in einer Position, die sich von der des ersten Befestigungsmechanismus (97) unterscheidet.

3. Das Sattel-Typ-Fahrzeug (1) gemäß Anspruch 2, bei dem der zweite Befestigungsmechanismus (98) an einer weiter hinten gelegenen Position angeordnet ist als der erste Befestigungsmechanismus (97), und
eine Länge (X2) in einer Oben-Unten-Richtung der hinteren Abdeckung (36) an einer Position des zweiten Befestigungsmechanismus (98) in einer Vorne-Hinten-Richtung des Fahrzeugs, wenn das Fahrzeug (1) von der Seite betrachtet wird, kürzer ist als eine Länge (X1) in der Oben-Unten-Richtung der hinteren Abdeckung (36) an einer Position des ersten Befestigungsmechanismus (97) in der Vorne-Hinten-Richtung des Fahrzeugs, wenn das Fahrzeug (1) von der Seite betrachtet wird, und
der zweite Befestigungsmechanismus (98) folgende Merkmale umfasst:
drei zweite Befestigungsabschnitte (102a bis 102c), die an dem hinteren Blinker (44), der oberen hinteren Abdeckung (83) beziehungsweise der unteren hinteren Abdeckung (84) angeordnet sind; und
ein zweites Befestigungsbauglied (105), das in jeden der drei zweiten Befestigungsabschnitte (102a bis 102c) eingefügt ist und das die drei zweiten Befestigungsabschnitte (102a bis 102c) befestigt.

4. Das Sattel-Typ-Fahrzeug (1) gemäß Anspruch 2 oder Anspruch 3, bei dem der erste Befestigungsmechanismus (97) folgende Merkmale umfasst:
drei erste Befestigungsabschnitte (101a bis 101c), die an dem hinteren Blinker (44), der oberen hinteren Abdeckung (83) beziehungsweise der unteren hinteren Abdeckung (84) angeordnet sind; und
ein erstes Befestigungsbauglied (104) das in jeden der drei ersten Befestigungsabschnitte (101 a bis 101 c) eingefügt ist und das die drei ersten Befestigungsabschnitte (101 a bis 101c) befestigt, und
der zweite Befestigungsmechanismus (98) folgende Merkmale umfasst:
drei zweite Befestigungsabschnitte (102a bis 102c), die an dem hinteren Blinker (44), der oberen hinteren Abdeckung (83) beziehungsweise der unteren hinteren Abdeckung (84) angeordnet sind; und
ein zweites Befestigungsbauglied (105), das in jeden der drei zweiten Befestigungsabschnitte (102a bis 102c) eingefügt ist und das die drei zweiten Befestigungsabschnitte (102a bis 102c) befestigt.

5. Das Sattel-Typ-Fahrzeug (1) gemäß Anspruch 4, bei dem die drei ersten Befestigungsabschnitte (101a bis 101c) folgende Merkmale umfassen:
einen ersten äußeren Befestigungsabschnitt (101a), der an der oberen hinteren Abdeckung (83) angeordnet ist;
einen ersten Zwischenbefestigungsabschnitt (101b), der an der unteren hinteren Abdeckung (84) angeordnet ist und der in einer Fahrzeugbreiterichtung auf einer Innenseite des ersten äußeren Befestigungsabschnitts (101a) angeordnet ist; und
einen ersten inneren Befestigungsabschnitt (101c), der an dem hinteren Blinker (44) angeordnet ist und der in der Fahrzeugbreiterichtung auf einer Innenseite des ersten Zwischenbefestigungsabschnitts (101b) angeordnet ist, und
die drei zweiten Befestigungsabschnitte (102a bis 102c) folgende Merkmale umfassen:
einen zweiten äußeren Befestigungsabschnitt (102a), der an der unteren hinteren Abdeckung (84) angeordnet ist;
einen zweiten Zwischenbefestigungsabschnitt (102b), der an der oberen hinteren Abdeckung (83) angeordnet ist und der in der Fahrzeugbreiterichtung auf einer Innenseite des zweiten äußeren Befestigungsabschnitts (102a) angeordnet ist; und
einen zweiten inneren Befestigungsabschnitt (102c), der an dem hinteren Blinker (44) angeordnet ist und der in der Fahrzeugbreiterichtung auf einer Innenseite des zweiten Zwischenbefestigungsabschnitts (102b) angeordnet ist.

6. Das Sattel-Typ-Fahrzeug (1) gemäß einem der Ansprüche 2 bis 5, das ferner folgende Merkmale aufweist:
einen dritten Befestigungsmechanismus (99), der den hinteren Blinker (44) an zumindest entweder der oberen hinteren Abdeckung (83) oder der unteren hinteren Abdeckung (84) befestigt an einer Position, die sich von der des ersten Befestigungsmechanismus (97) unterscheidet und die sich von der des zweiten Befestigungsmechanismus (98) unterscheidet.
wobei der erste Befestigungsmechanismus (97) den hinteren Blinker (44) an der hinteren Abdeckung (36) befestigt an einer Position vor der Blinkeröffnung (46r), wenn das Fahrzeug (1) von der Seite betrachtet wird, und
der zweite Befestigungsmechanismus (98) den hinteren Blinker (44) an der hinteren Abdeckung (36) befestigt an einer weiter hinten gelegenen Position als die Blinkeröffnung (46r), wenn das Fahrzeug (1) von der Seite betrachtet wird, und
der dritte Befestigungsmechanismus (99) den hinteren Blinker (44) an der hinteren Abdeckung (36) an einer Position befestigt, die weiter hinten liegt als ein vorderes Ende (46Ef) der Blinkeröffnung (46r), und weiter vorne als ein hinteres Ende (46Eb) der Blinkeröffnung (46r).

7. Das Sattel-Typ-Fahrzeug (1) gemäß Anspruch 6, bei dem der dritte Befestigungsmechanismus (99) den hinteren Blinker (44) an zumindest entweder der oberen hinteren Abdeckung (83) oder der unteren hinteren Abdeckung (84) befestigt an einer Position, die weiter hinten liegt als das vordere Ende (46Es) der Blinkeröffnung (46r), und weiter vorne als das hintere Ende (46Eb) der Blinkeröffnung (46r), und höher als der erste Befestigungsmechanismus (97) und der zweite Befestigungsmechanismus (98).

8. Das Sattel-Typ-Fahrzeug (1) gemäß einem der Ansprüche 1 bis Anspruch 7, bei dem eine Länge in der Oben-Unten-Richtung von dem hinteren Ende (46Eb) der Blinkeröffnung (46r) zu einer unteren Kante (84L) der unteren hinteren Abdeckung (84), wenn das Fahrzeug (1) von der Seite betrachtet wird, kürzer ist als eine Länge in der Oben-Unten-Richtung von dem hinteren Ende (46Eb) der Blinkeröffnung (46r) zu einer Oberkante (83Lu) der oberen hinteren Abdeckung (83), wenn das Fahrzeug (1) von der Seite betrachtet wird.

9. Das Sattel-Typ-Fahrzeug (1) gemäß Anspruch 1, bei dem die obere hintere Abdeckung (83) eine Seitenöffnungskante (80) umfasst, die einen Abschnitt der Lichtöffnung (45r) definiert,
die Seitenöffnungskante (80) vor dem Rücklicht (43) angeordnet ist, wenn das Fahrzeug (1) von der Seite betrachtet wird, und
ein hinteres Ende (84Eb) der unteren hinteren Abdeckung (84) vor der Seitenöffnungskante (80) angeordnet ist, wenn das Fahrzeug (1) von der Seite betrachtet wird.

10. Das Sattel-Typ-Fahrzeug (1) gemäß einem der Ansprüche 1 bis 9, bei dem die obere hintere Abdeckung (83) folgende Merkmale umfasst:
eine obere Öffnungskante (85), die zumindest die Oberkante der Blinkeröffnung (46r) definiert; und
einen Verstärkungsabschnitt (91 u), von dem zumindest ein Abschnitt unter der oberen Öffnungskante (85) angeordnet ist, wenn das Fahrzeug (1) von der Seite betrachtet wird, und
der Verstärkungsabschnitt (91 u) an einer weiter innen gelegenen Position angeordnet ist als die obere Öffnungskante (85) in der Fahrzeugbreiterichtung, und sich von einer Position, die weiter vorne liegt als die obere Öffnungskante (85), zu einer Position erstreckt, die weiter hinten liegt als die obere Öffnungskante (85).

## Revendications

1. Véhicule de type à selle (1), comprenant:
un châssis de carrosserie de véhicule (2);
une roue arrière (Wr) supportée par le châssis de carrosserie de véhicule (2);
un couvercle arrière (36) disposé à côté du châssis de carrosserie de véhicule (2) et au moins une partie duquel est disposée au-dessus de la roue arrière (Wr) lorsque le véhicule (1) est vu de côté, et;
un clignotant arrière (44) dont au moins une partie est disposée sur le couvercle arrière (36);
le couvercle arrière (36) comporte:
une ouverture de clignotant (46r) dans laquelle est disposé le clignotant arrière (44);
un couvercle arrière supérieur (83) définissant au moins un bord supérieur de l'ouverture de clignotant (46r);
un couvercle arrière inférieur (84) définissant au moins un bord inférieur de l'ouverture de clignotant (46r) et formé de manière structurellement indépendante du couvercle arrière supérieur (83); et
des parties de fixation (101a à 101c, 102a à 102c, 103a, 103c) par lesquelles le couvercle arrière supérieur (83) et le couvercle arrière inférieur (84) sont fixés l'un à l'autre;
le clignotant arrière (44) est fixé aux parties de fixation (101a à 101c, 102a à 102c, 103a, 103c);
le véhicule de type à selle (1) comprenant par ailleurs
un feu arrière (43) disposé à l'intérieur d'une ouverture de feu (45r) ouvert sur une surface extérieure du couvercle arrière (36),
**caractérisé par le fait que** le feu arrière (43) est positionné derrière le clignotant arrière (44) lorsque le véhicule (1) est vu du côté,
et le clignotant arrière (44) est séparé du feu arrière (43) par une partie du couvercle arrière (36) disposée entre le clignotant arrière (44) et le feu arrière (43).

2. Vésicule de type à selle (1) selon la revendication 1, comprenant par tailleurs:
un premier mécanisme de fixation (97) qui fixe le couvercle arrière supérieur (83) et le clignotant arrière (44) l'un à l'autre;
un deuxième mécanisme de fixation (98) qui fixe le couvercle arrière inférieur (84) et le clignotant arrière (44) l'un à l'autre en une position différente de celle du premier mécanisme de fixation (97).

3. Véhicule de type à selle (1) selon la revendication 2, dans lequel le deuxième mécanisme de fixation (98) est disposé en une position plus en arrière que le premier mécanisme de fixation (97), et
une longueur (X2) dans une direction du haut vers le bas du couvercle arrière (36) en une position du deuxième mécanisme de fixation (98) dans une direction de l'avant vers l'arrière du véhicule lorsque le véhicule (1) est vu de côté est plus courte qu'une longueur (X1) dans la direction du haut vers le bas du couvercle arrière (36) en une position du premier mécanisme de fixation (97) dans la direction de l'avant vers l'arrière du véhicule lorsque le véhicule (1) est vu du côté, et
le deuxième mécanisme de fixation (98) comporte:
trois deuxièmes parties de fixation (102a à 102c) disposées respectivement sur le clignotant arrière (44), sur le couvercle arrière supérieur (83) et sur le couvercle arrière inférieur (84); et
un deuxième élément de fixation (105) qui est introduit dans chacune des trois deuxièmes parties de fixation (102a à 102c) et qui fixe les trois deuxièmes parties de fixation (102a à 102c).

4. Véhicule de type à selle (1) selon la revendication 2 ou la revendication 3, dans lequel le premier mécanisme de fixation (97) comporte
trois premières parties de fixation (101a à 101c) disposées respectivement sur le clignotant arrière (44), sur le couvercle arrière supérieur (83) et sur le couvercle arrière inférieur (84); et
un premier élément de fixation (104) qui est introduit dans chacune des trois premières parties de fixation (101a à 101e) et qui fixe les trois premières parties de fixation (101a à 101c), et
le deuxième mécanisme de fixation (98) comporte
trois deuxièmes parties de fixation (102a à 102c) disposées respectivement sur le clignotant arrière (44), sur le couvercle arrière supérieur (83) et le couvercle arrière inférieur (84); et
un deuxième élément de fixation (105) qui est introduit dans chacune des trois deuxièmes parties de fixation (102a à 102c) et qui fixe les trois deuxièmes parties de fixation (102a à 102c).

5. Véhicule de type à selle (1) selon la revendication 4, dans lequel les trois premières parties de fixation (101a à 101c) comportent
une première partie de fixation extérieure (101a) disposée sur le couvercle arrière supérieur (83);
une première partie de fixation intermédiaire (101b) qui est disposée sur le couvercle arrière inférieur (84) et qui est disposé sur un côté intérieur de la première partie de fixation extérieure (101a) dans un sens de la largeur du véhicule; et
une première partie de fixation intérieure (101c) qui est disposée sur le clignotant arrière (44) et qui est disposée sur un côté intérieur de la première partie de fixation intermédiaire (101b) dans le sens de la largeur du véhicule, et
les trois deuxièmes parties de fixation (102a à 102c) comportent une deuxième partie de fixation extérieure (102a) disposée sur le couvercle arrière inférieur (84);
une deuxième partie de fixation intermédiaire (102b) qui est disposée sur le couvercle arrière supérieur (83) et qui est disposée sur un côté intérieur de la deuxième partie de fixation extérieure (102a) dans le sens de la largeur du véhicule; et
une deuxième partie de fixation intérieure (102c) qui est disposée sur le clignotant arrière (44) et qui est disposée sur un côté intérieur de la deuxième partie de fixation intermédiaire (102b) dans le sens de la largeur du véhicule.

6. Véhicule de type à selle (1) selon l'une quelconque des revendication 2 à la revendication 5, comprenant par tailleurs:
un troisième mécanisme de fixation (99) qui fixe le clignotant arrière (44) sur au moins l'un parmi le couvercle arrière supérieur (83) et le couvercle arrière inférieur (84) dans une position différente de celle du premier mécanisme de fixation (97) et différente de celle du deuxième mécanisme de fixation (98),
dans lequel le premier mécanisme de fixation (97) fixe le clignotant arrière (44) au couvercle arrière (36) en une position en avant de l'ouverture de clignotant (46r de) lorsque le véhicule (1) est vu de côté, et
le deuxième mécanisme de fixation (98) fixe le clignotant arrière (44) sur le couvercle arrière (36) en une position plus en arrière que l'ouverture de clignotant (46r) lorsque le véhicule (1) est vu de côté, et
le troisième mécanisme de fixation (99) fixe le clignotant arrière (44) sur le couvercle arrière (36) en une position plus en arrière qu'une extrémité avant (46Ef) de l'ouverture de clignotant (46r) et plus en avant qu'une extrémité arrière (46Eb) de l'ouverture de clignotant (46r).

7. Véhicule de type à selle (1) selon la revendication 6, dans lequel le troisième mécanisme de fixation (99) fixe le clignotant arrière (44) à au moins l'un parmi le couvercle arrière supérieur (83) et le couvercle arrière inférieur (84) en une position plus en arrière que l'extrémité avant (46Ef) de l'ouverture de clignotant (46r) et plus en avant que l'extrémité arrière (46Eb) de l'ouverture de clignotant (46r) et plus haute que le premier mécanisme de fixation (97) et que le deuxième mécanisme de fixation (98).

8. Véhicule de type à selle (1) selon l'une quelconque des revendication 1 à la revendication 7, dans lequel une longueur dans la direction du haut vers le bas de l'extrémité arrière (46Eb) de l'ouverture de clignotant (46r) à un bord inférieur (84L) du couvercle arrière inférieur (84) lorsque le véhicule (1) est vu de côté est plus courte qu'une longueur dans la direction du haut vers le bas de l'extrémité arrière (46Eb) de l'ouverture de clignotant (46r) à un bord supérieur (83Lu) du couvercle arrière supérieur (83) lorsque le véhicule (1) est vu de côté.

9. Véhicule de type à selle (1) selon la revendication 1, dans lequel le couvercle arrière supérieur (83) comporte un bord d'ouverture latéral (80) définissant une partie de l'ouverture de feu (45r),
le bord d'ouverture latéral (80) est disposé en avant du feu arrière (43) lorsque le véhicule (1) est vu de côté, et
une extrémité arrière (84Eb) du couvercle arrière inférieur (84) est disposé en avant du bord d'ouverture latéral (80) lorsque le véhicule (1) est vu de côté.

10. Véhicule du type à selle (1) selon l'une quelconque des revendication 1 à la revendication 9, dans lequel le couvercle arrière supérieur (83) comporte
un bord d'ouverture supérieur (85) définissant au moins le bord supérieur de l'ouverture de clignotant (46r); et
une partie de renforcement (91u) dont au moins une partie est disposée au-dessous du bord d'ouverture supérieur (85) lorsque le véhicule (1) est vu de côté, et
la partie de renforcement (91u) est disposée en une position plus vers l'intérieur que le bord d'ouverture supérieur (85) dans le sens de la largeur du véhicule, et s'étend d'une position plus en avant que le bord d'ouverture supérieur (85) à une position plus en arrière que le bord d'ouverture supérieur (85).
